# EUROPÄISCHE PATENTSCHRIFT

(11) **EP 3 813 961 B1**
(45) Veröffentlichungstag und Bekanntmachung des Hinweises auf die Patenterteilung: **24.04.2024**
(21) Anmeldenummer: 19734075.5
(22) Anmeldetag: 27.06.2019
(51) Int. Cl.: A62C 35/68, F16L 41/08, F16L 58/10, F16L 13/02

(54) **VERFAHREN ZUM HERSTELLEN EINES ROHRLEITUNGSELEMENTS, INSBESONDERE EINES ROHRLEITUNGSELEMENTS EINER FEUERLÖSCHANLAGE, ROHRLEITUNGSELEMENT UND ROHRLEITUNGSSYSTEM IM SELBIGEN**
METHOD FOR PRODUCING A PIPE ELEMENT, PARTICULARLY A PIPE ELEMENT OF A FIRE-EXTINGUISHING FACILITY, PIPE ELEMENT AND PIPE SYSTEM COMPRISING SAME
PROCÉDÉ POUR LA FABRICATION D'UN ÉLÉMENT DE CONDUITE TUBULAIRE, EN PARTICULIER D'UN ÉLÉMENT DE CONDUITE TUBULAIRE D'UNE INSTALLATION D'EXTINCTION DE FEU, ÉLÉMENT DE CONDUITE TUBULAIRE ET SYSTÈME DE CONDUITE TUBULAIRE DANS CELUI-CI

(30) Priorität: 27.06.2018 DE 102018115506
(43) Veröffentlichungstag der Anmeldung: 05.05.2021
(73) Patentinhaber: Minimax Viking Research & Development GmbH, 23840 Bad Oldesloe (DE)
(72) Erfinder: RÖNPAGEL, Andreas, 23840 Bad Oldesloe (DE)
(74) Vertreter: Eisenführ Speiser
(86) Internationale Anmeldenummer: PCT/EP2019/067106
(87) Internationale Veröffentlichungsnummer: WO 2020/002486

(56) Entgegenhaltungen:
- EP-A1- 2 623 163
- EP-A2- 0 402 648
- DE-A1-102016 001 294
- DE-B1- 1 627 629
- US-A1- 2002 195 426
- US-A1- 2012 111 837
- US-A1- 2018 031 152

## Beschreibung

Die Erfindung betrifft ein Verfahren zum Herstellen eines Rohrleitungselements, insbesondere eines Rohrleitungselements einer Feuerlöschanlage. Ferner betrifft die Erfindung ein solches Rohrleitungselement und ein Rohrleitungssystem mit einem solchen Rohrleitungselement.

Verfahren zum Herstellen von Rohrleitungen für Feuerlöschanlagen sind allgemein bekannt. Rohrleitungselemente in Feuerlöschanlagen sind der besonderen Herausforderung ausgesetzt, dass sie über sehr lange Zeiträume ungenutzt in Objekten installiert sind, und im Einsatzfall die ihnen zukommende Aufgabe des Fluidtransports gewährleisten müssen.

Weit verbreitet sind etwa Feuerlöschanlagen, bei denen die Rohrleitungssysteme auch im Bereitschaftszustand Löschflüssigkeit führen und alternativ solche, die im Bereitschaftszustand in den Sprinklerleitungen noch keine Löschflüssigkeit führen. Insbesondere bei den letztgenannten Systemen ist die Korrosionsanfälligkeit im Inneren der Rohre eine besondere Herausforderung, weswegen im Stand der Technik Bemühungen unternommen worden sind, die Korrosionsbeständigkeit von Rohrleitungselementen insbesondere für Feuerlöschanlagen zu senken. Um die Problematik von Korrosion innerhalb von Feuerlöschanlagen zu umgehen, haben sich alternative Ansätze entwickelt, in denen große Teile des Rohrleitungssystems, und mit ihnen überwiegende Mengen der verbauten Rohrleitungselemente im Bereitschaftszustand nicht mit Löschfluid gefüllt sind, sondern mit Gasen.

Die Kosten für die Systeme aus dem Stand der Technik sind bisweilen beträchtlich, da einerseits die Verwendung korrosionsresistenter Rohre oder aufwendige Passivierungsverfahren notwendig waren, und zum anderen hohe Installationskosten für das Einfüllen von Gas in die jeweiligen Rohrleitungssysteme notwendig war.

In EP 1 2153 964 und EP 2 766 653 sind jeweils Systeme und Verfahren beschrieben, die gegenüber dem Stand der Technik eine deutliche Verbesserung erzielen. Dort wird erstmalig die Verwendung einer Polymerveredelung mittels Autodeposition auf der Rohrinnenseite bei Rohrleitungselementen von Feuerlöschanlagen beschrieben. Die dort beschriebene Polymerveredelung ist durch die erzielte ionische Bindung eines polymerbasierten Beschichtungsmaterials an der Rohroberfläche äußerst robust und ermöglicht es, einfache, per se noch nicht korrosionsbeständige Metalle, insbesondere niedriglegierte Stahlsorten, zu verwenden. Gleichzeitig wird selbst über längere Beobachtungszeiträume sehr geringe Korrosionsentwicklung bis hin vollständiger Korrosionsbeständigkeit erreicht.

Aus EP 0 402 648 A2 ist ferner ein Verfahren zum einseitigen Wurzelpfadschweißen einer Rohrverbindung bekannt. An den Stirnseiten der miteinander zu verbindenden Rohrabschnitte wird eine Ringnut mit V-förmigem Bodenabschnitt erzeugt. Auf der Innenseite der Rohrabschnitte wird im Stoßbereich der Rohre ein Trägermaterial angeordnet und mittels einer entlang einer Führungsschiene auf der Außenseite der Rohrabschnitte geführten Schweißmaschine nacheinander von außen verschiedene Schweißnahtschichten erzeugt.

DE 1 627 629 B1 zeigt einen Einlegering mit einer Nut zum Anschweißen von Nippeln auf Dampf-trommeln mit voller Durchschweißung der Wurzelnaht. Der Einlegering bildet eine Art Abstandhalter zwischen zwei miteinander zu verbindenden Bauteilen und wird beim Schweißen mit diesen verbunden.

US 2012/111837 A1 betrifft eine Vorrichtung und ein Verfahren zur Reparatur von in Betrieb befindlichen Rohrleitungen und Behältern. Das Verfahren wird unter Verwendung eines rohrinnenseitig eingesetzten Pipeline-Molchs durchgeführt.

Die US2002195426 A1 zeigt Aufsätze zur Befestigung an einem hergestellten Loch in einem Rohr und Verfahren zu deren Befestigung auf diesem Rohr. Nichtsdestotrotz besteht gegenüber dem Stand der Technik weiterer Verbesserungsbedarf. So besteht gegenüber dem Stand der Technik das Bestreben, nicht nur einfache Rohrleitungselemente mit einer Polymerveredelung zu versehen, die lediglich aus einem rohrförmigen Hohlkörper mit einem Einlass und einem Auslass bestehen, sondern auch solche Rohrleitungselemente, die mehrere Auslässe aufweisen, und insbesondere aus mehreren Hohlkörpern zusammengesetzt sind. Das Zusammensetzen mehrerer Hohlkörper zu komplexen Rohrleitungselementen erfolgt entweder mittels Zusammenstückeln der Hohlkörper über Kupplungen, Rohrverbinder und dergleichen, oder mittels Schweißen. Es hat sich herausgestellt, dass das Verwenden von Rohrverbindern im Bereich des Übergangs von einem Hohlkörper zum nächsten Hohlkörper zu einer Erhöhung des Strömungswiderstandes führt, was die Strömungsgeschwindigkeit herab- und entstehende Druckverluste heraufsetzt, ausgedrückt durch den sogenannten C-Faktor. Der notwendige apparative Aufwand zum Fördern des Löschfluids wird hierdurch potentiell höher, beispielsweise in Form des Bedarfs leistungsfähigerer Pumpen oder größerer Rohr-Nennweiten. Der C-Faktor berechnet sich nach allgemein bekannten Grundsätzen anhand der Hazen-Williams-Gleichung.

Sofern im Stand der Technik erste und zweite Hohlkörper zu einem Rohrleitungselement mittels Schweißen verbunden wurden, so wurde dies jeweils lediglich unter Beachtung des Erfordernisses der Druckdichtigkeit vorgenommen. In der bisherigen Praxis waren also die Verbindungen der Hohlkörper am Rohrleitungselement zwar druckdicht miteinander verbunden. Die beispielsweise aus EP 2 766 653 bekannte Langzeit-Korrosionsfestigkeit stelle sich aber dennoch nicht zuverlässig ein.

Zudem bilden sich beim Schweißen in der Regel Schweißspritzer, welche die Oberfläche des Rohrleitungeelements nachteilig beeinflussen. Im Stand der Technik versuchte man bisnalg, die Spritzer mittels der Verwendung von Wasserbädern aufzufangen, was aber hinsichtlich der Aspekte Verschmutzung, Notwendigkeit von Trocknung, Entsorgung und Korrosion des Rohrleitungselements als nachteilig angesehen wurde.

Demzufolge lag der Erfindung die Aufgabe zugrunde, ein Verfahren zum Herstellen eines polymerveredelten Rohrleitungselements anzugeben, welches die vorstehend beschriebenen Nachteile möglichst weitgehend überwindet. Insbesondere lag der Erfindung die Aufgabe zugrunde, ein Verfahren der eingangs bezeichneten Art anzugeben, was trotz des Vorhandenseins einer Schweißverbindung bei komplexen Rohrleitungselementen bessere Strömungseigenschaften und eine Verbesserung der Korrosionsbeständigkeit ermöglicht.

Die Erfindung löst die ihr zugrundeliegende Aufgabe bei dem eingangs bezeichneten Verfahren mit den Merkmalen von Anspruch 1. Insbesondere umfasst das Verfahren die Schritte:
- Bereitstellen eines ersten Hohlkörpers und eines zweiten Hohlkörpers,
- Positionieren der Hohlkörper in einer Schweißzone derart zueinander, dass in der Schweißzone das Verbinden der Hohlkörper erfolgen kann,
- Positionieren eines Auffangbehälters innerhalb des ersten und/oder zweiten Hohlkörpers im Bereich der Schweißzone, und
- Schweißen des ersten Hohlkörpers an den zweiten Hohlkörper in der Schweißzone, so dass das Rohrleitungselement erhalten wird, wobei eine vollständig umlaufende Schweißnaht erzeugt wird, die eine sich auf der Innenseite des Rohrleitungselements erstreckende Wurzel aufweist, und
- Auffangen von während des Schweißens auf der Innenseite des Rohrleitungselements entstehenden Schweißspritzern mittels des Auffangbehälters

Das erfindungsgemäße Verfahren wird vorteilhaft weitergebildet, in dem die Hohlkörper jeweils wenigstens eine Kantenfläche aufweisen, wobei die Kantenflächen des ersten und zweiten Hohlkörpers jeweils eine umlaufende Innenkante aufweisen, und der Schritt des Schweißens umfasst: Ausbilden der Wurzel der Schweißnaht in einer Dicke, die wenigstens eine der Innenkanten, und vorzugsweise beide Innenkanten, vollständig erfasst.

Grundsätzlich gilt, dass die Eignung der Innenseite des Rohrleitungselements nach dem Schweißen umso geeigneter für das nachfolgende Beschichten ist, desto mehr Anteile der Kantenflächen von der Wurzel erfasst worden sind, da die Wurzel einen sehr zuverlässigen Verschluss von etwaigen zuvor an der Kante bestehenden Unregelmäßigkeiten durch Aufschmelzen erzielt, und zugleich ein im Vergleich zur Kantenfläche der Hohlkörper weichere Oberflächengeometrie aufweist. Unter Unregelmäßigkeiten werden insbesondere Risse, Spalten, Kapillaren etc. im Submillimeterbereich sowie scharfe Kanten verstanden. Je mehr solcher Unregelmäßigkeiten vermieden werden können, desto besser ist der zu erwartende Beschichtungserfolg. Es hat sich erfindungsgemäß herausgestellt, dass eine zufriedenstellende Beschichtung bereits erreicht wird, wenn die Wurzel lediglich eine der beiden Kantenflächen des ersten oder zweiten Hohlkörpers vollständig erfasst, und von der jeweils anderen Kantenfläche ein Teilbereich, insbesondere ein radial innerer Teilbereich, nicht erfasst wird. Besonders bevorzugt werden beide Kantenflächen vollständig erfasst. Es wurde erkannt, dass bei anschließender Polymerveredelung der Rohrleitungselemente insbesondere mittels Anwendung eines Autodepositionsverfahrens auch im Stand der Technik bereits die Kanten der Rohrleitungselemente beschichtetet wurden. Entgegen bislang etablierter Vormeinung gelang dies allerdings noch nicht in zufriedenstellender Dicke. Hier zeigt sich ein weiterer Vorteil der Erfindung: Durch die mit der Wurzelerfassung erreichte Vermeidung scharfer Kanten im Schweißnahtbereich wird eine bessere Beschichtung auch der etwaig verbleibenden Kanten erzielt. Unter einer scharfen Kante wird ein Kantenwinkel von weniger als 90° verstanden.

Die Erfindung basiert auf der Erkenntnis, dass bei einem vollständigen Durchschweißen des ersten und zweiten Schweißkörpers in der Schweißzone derart, dass die Wurzel der Schweißnaht in gewünschter Weise ausgebildet wird, das Risiko einer Anlagerung von Schweißspritzern auf der Innenseite der Hohlkörper beziehungsweise des Rohrleitungselements auftreten kann. Das erfindungsgemäße Auffangen von Schweißspritzern mittels eines Auffangbehälters eliminiert zumindest weitgehend das Anlagern solcher Schweißspritzer auf der Rohrinnenseite, was zu einer deutlichen Erhöhung der Gleichförmigkeit der Oberfläche des Rohrleitungselements insgesamt führt. Besonders vorteilhaft macht sich bemerkbar, dass im Bereich der Schweißnaht eine Verbesserung der Gleichförmigkeit der Oberfläche erreicht wird, selbst wenn die Schweißnaht noch einen geringen Einfluss auf den Strömungswiderstand ausmacht. Das erfindungsgemäß verschweißte Rohr zeichnet sich dadurch aus, dass es in sich bereits einen geringeren Strömungswiderstand aufweist. Ferner eignet sich das erfindungsgemäße Rohr besonders für ein nachgelagertes Oberflächenbeschichtungsverfahren, beispielsweise das Aufbringen einer polymerbasierten Schicht auf der Innenseite des Rohrleitungselements.

Die Vermeidung der Anlagerung von Schweißspritzern macht sich neben der gesteigerten Oberflächengleichförmigkeit auch darin vorteilhaft bemerkbar, dass Schweißspritzer sich in ungünstigen Konstellationen im Laufe der Zeit von der Oberfläche des Rohrleitungselements lösen können. Selbst, wenn die Schweißspritzer erfolgreich beschichtet worden sind, würden sie nach ihrem Ablösen eine unbeschichtete Stelle zurücklassen. Jenes Risiko wird aber erfindungsgemäß jedenfalls weitgehend abgestellt. Das Aufbringen der polymerbasierten Schicht wird weiter unten in bevorzugten Ausführungsformen näher erläutert.

In einer vorteilhaften Weiterbildung der Erfindung wird die Schweißnaht mittels eines Schweißwerkzeuges erzeugt, in dem das Schweißwerkzeug und/oder die Hohlkörper derart relativ zueinander bewegt werden, dass eine Schweißstelle eine Bahn entlang der ersten oder zweiten Hohlkörper beschreibt, und der Auffangbehälter im Wesentlichen gegenüber der Schweißstelle positioniert wird. Hierunter ist zu verstehen, dass der Auffangbehälter nicht streng radial gegenüber der Schweißstelle angeordnet sein muss, sondern vielmehr so auf die Schweißstelle ausgerichtet sein muss, dass er die sich in einem Streuwinkel von der Schweißstelle aus ausbreitenden Schweißspritzer auffangen kann. Die Richtung der Ausbreitung hängt unter anderem von der Ausrichtung des Schweißwerkzeugs ab, und unter Berücksichtigung der Breite und Länge des Auffangbehälters kann sich dieser auch seitlich neben der Radialen zur Schweißstelle befinden, solange er den Streukegel abdeckt.

Die Relativbewegung kann erzeugt werden, indem das Schweißwerkzeug entlang der Hohlkörper eine Bahn abfährt, oder indem die Hohlkörper relativ zu einem stationären Schweißwerkzeug bewegt werden, beispielsweise rotiert werden. Denkbar sind auch Kombinationen dieser beiden Bewegungsformen. Erwartungsgemäß wird sich flüssiges Schweißgut von der Seite der Schweißwurzel aus mit einem gewissen Streuwinkel von der Innenwand der Hohlkörper fortbewegen, so dass es sich vorteilhaft auswirkt, den Auffangbehälter im Wesentlichen gegenüber der Schweißstelle zu positionieren, von welcher aus sich die Schweißspritzer erstrecken.

In einer bevorzugten Ausführungsform wird der Auffangbehälter von einem Stirnende des ersten oder zweiten Hohlkörpers innerhalb des jeweiligen Hohlkörpers in die Schweißzone eingeführt. Vorzugsweise wird der Auffangbehälter mittels einer Lanze in einem Abstand zu der Wand des jeweiligen Hohlkörpers bewegt. Die Lanze kann in bevorzugten Ausführungsformen beispielsweise motorisch angetrieben werden, oder manuell bewegt werden. Das Beabstanden des Auffangbehälters von der Wand der Hohlkörper beziehungsweise des Rohrleitungselements verhindert das Eintragen von Kratzern und anderen Oberflächenbeschädigungen in die Wand der Hohlkörper, was wiederum eine bessere Beschichtbarkeit und Oberflächengüte zur Folge hat.

Vorzugsweise ist der Auffangbehälter relativ zu dem ersten und/oder zweiten Hohlkörper um die Längsachse des ersten und/oder zweiten Hohlkörpers drehbar gelagert. Dies erlaubt es, den Auffangbehälter im Einklang mit der sich entlang des Hohlkörpers umlaufend bewegenden Schweißstelle mitzubewegen, und in jeder Stellung des Schweißwerkzeugs entstehende Schweißspritzer aufzufangen. Dies ist insbesondere dann von Vorteil, wenn Hohlkörper mit gleichen oder annähernd gleichen Nennweiten miteinander verschweißt werden sollen. Unter annähernd gleichen Nennweiten werden Nennweitenabweichungen im Bereich von bis zu 2 mm verstanden.

In einer weiteren bevorzugten Ausführungsform wird vor dem Einführen des Auffangbehälters eine Führungsschiene in den oder die Hohlkörper eingeführt. Besonders bevorzugt liegt die Führungsschiene in eingeführtem Zustand an der Wand des jeweiligen Hohlkörpers an. Der Auffangbehälter kann mittels der Lanze sodann auf der Führungsschiene entlang verschoben werden. Das macht die Bewegung des Auffangbehälters selbst leichter beherrschbar und ermöglicht die Verwendung einer leichteren Lanze, da der Auffangbehälter nicht über die gesamte Lanzenlänge getragen werden muss. Zudem ermöglicht die Führungsschiene beim Einführen des Auffangbehälters in beliebig lange Hohlkörper.

Die Schienewird vorzugsweise berührungsfrei in das Rohr eingeführt und dann abgelegt, so dass ein Schleifen der Schienen entlang der Innenwand des Rohrleitungselements vermieden wird.

In einer weiteren bevorzugten Ausführungsform weist der Auffangbehälter in seiner Einführrichtung eine Länge auf, die mindestens dem Durchmesser desjenigen Hohlkörpers entspricht, in den der Auffangbehälter eingeführt wird, und die vorzugsweise in einem Bereich von 1,5 - 3 mal dem größten Durchmesser desjenigen Hohlköpers entspricht, in den der Auffangbehälter eingeführt wird. Sofern die zu verschweißenden Hohlkörper rohrförmig ausgebildet sind, beziehungsweise hohlzylindrisch ausgebildet sind, weisen sie einen im Wesentlichen konstanten Durchmesser im Inneren auf. Für den Fall, dass die Hohlkörper nicht vollständig zylindrisch ausgebildet sind, beispielsweise indem sie lokal abgeflacht sind oder insgesamt oval geformt sind, oder gegebenenfalls auch polygonal geformt sind, wird als Vergleichsgröße der Durchmesser derjenigen in Querrichtung durch den Hohlkörper herangezogen, der den größten Wert annimmt.

In einer weiteren bevorzugten Ausführungsform weist der Auffangbehälter quer zu seiner Einführrichtung eine Breite auf, die mindestens dem 0,3fachen des Durchmessers desjenigen Hohlkörpers entspricht, in den der Auffangbehälter eingeführt wird, und die vorzugsweise in einem Bereich von 0,5 - 1,0 mal dem Durchmesser desjenigen Hohlkörpers entspricht, in den der Auffangbehälter eingeführt wird.

Grundsätzlich hängt die notwendige Breite des Auffangbehälters quer zu seiner Einführrichtung, die noch zu einem vollständigen oder zumindest weitestgehenden Auffangen aller Schweißspritzer im Rohrinneren führt, und die Maximale Breite, die der Auffangbehälter einnehmen darf, ohne sich an der Rohrwand zu verklemmen oder diese zu zerkratzen, davon ab, in welchem Abstand der Auffangbehälter zu der Schweißstelle in der Schweißzone positioniert werden soll. Hierunter wird insbesondere der Abstand des der Schweißstelle zugewandten Endes des Auffangbehälters, gewissermaßen dessen "Oberkante", zu der Schweißstelle in radialer Richtung bezogen auf die Längsachse des Hohlkörpers, in den der Auffangbehälter eingeführt ist, verstanden. Je näher der Auffangbehälter an der Schweißstelle positioniert ist, desto geringer kann die Breite des Auffangbehälters ausfallen. Bei größeren Abständen wird aufgrund der Streuung der Schweißspritzer die notwendige Breite entsprechend höher.

In einer weiteren bevorzugten Ausführungsform weist der Auffangbehälter quer zu seiner Einführrichtung eine Breite auf und nimmt in eingeführtem Zustand in der Schweißzone einen Abstand zur Schweißstelle ein, wobei das Verhältnis der Breite zum Abstand in einem Bereich 0,5 oder höher liegt, vorzugsweise in einem Bereich von 1 bis 4, besonders bevorzugt in einem Bereich von 1,5 bis 3,5. Hierdurch wird vorzugsweise ein Streukegel der Schweißspritzer in einem Bereich von bis zu 90°, gemessen um die Achse des Schweißwerkzeugs herum, abgedeckt.

In einer weiteren bevorzugten Ausführungsform weisen der erste und zweite Hohlkörper jeweils eine Wand auf, und die Wand weist jeweils eine umlaufende Kantenfläche auf, wobei das Verfahren umfasst:
- Ausrichten der umlaufenden Kantenfläche des ersten Hohlkörpers und der umlaufenden Kantenfläche des zweiten Hohlkörpers aufeinander, und Erzeugen der Schweißnaht entlang der umlaufenden Kantenflächen. Unter dem Ausrichten der Kantenflächen aufeinander wird verstanden, dass die Kantenfläche des ersten Hohlkörpers und die Kantenfläche des zweiten Hohlkörpers derart relativ zueinander orientiert und beabstandet werden, dass die Beiden Hohlkörper entlang der Kantenflächen miteinander verschweißt werden können.

In einer bevorzugten Ausführungsform des Verfahrens erfasst die Wurzel der Schweißnaht die umlaufende Innenkante eines der Hohlkörper vollständig, und die verbleibende Innenkante des anderen Hohlkörpers ist an der Schweißnaht um einen vorbestimmten Maximalwert in radialer Richtung von der Schweißnaht beabstandet.

Vorzugsweise ist der vorbestimmte Maximalwert, sofern gleiche Wandstärken vorliegen, kleiner oder gleich der Hälfte einer Wandstärke der Hohlkörper, besonders bevorzugt kleiner oder gleich eines Viertels der Wandstärke der Hohlkörper. Alternativ ist der Maximalwert, sofern unterschiedliche Wandstärken vorliegen, vorzugsweise kleiner oder gleich einer Differenz der Wandstärken der Hohlkörper, besonders bevorzugt kleiner oder gleich der Hälfte der Differenz der Wandstärken der Hohlkörper.

In einer weiteren bevorzugten Ausführungsform des Verfahrens, bei dem der Schritt des Schweißens umfasst: Ausbilden der Wurzel der Schweißnaht in einer Dicke, die die Innenkanten beider Hohlkörper vollständig erfasst, wird das Schweißen so ausgeführt, dass die Wurzel der Schweißnaht von einer Innenseite der Wand des ersten und/oder zweiten Hohlkörpers um einen vorbestimmten Maximalwert radial nach innen vorsteht, wobei der vorbestimmte Maximalwert vorzugsweise das 0,7fache der Wandstärke der Hohlkörper oder weniger beträgt. Durch das auf diese Weise sichergestellte, allerdings nur leichte Hervorstehen der Schweißnaht in das Innere des Rohrleitungselements kann auf einfache Weise sichergestellt werden, dass wirklich beide Kantenflächen vollständig erfasst worden sind, und keine Kavitäten oder Ähnliches nach dem Schweißen im Bereich der Innenkanten der Hohlkörper verbleiben. Durch Begrenzen der maximalen Höhe, um die die Schweißnaht nach innen vorsteht, wird sichergestellt, dass durch die Schweißnaht kein ungewünschter erhöhter Strömungswiderstand erzeugt wird, was den C-Faktor, also die Langzeit-Korrosionssicherheit des Rohrleitungselements, reduzieren würde.

Die erzeugte Kantenfläche entspricht vorzugsweise der Kontur des jeweils anderen Hohlkörpers, an den der Hohlkörper mit seiner Kantenfläche angeschweißt werden soll. Vorzugsweise wird die Kontur der zu erzeugenden Kantenfläche vorab messtechnisch bestimmt, und dann die Kantenfäche in Abhängigkeit der zuvor bestimmten Kontur erzeugt.

Vorzugsweise ist die umlaufende Kantenfläche des ersten Hohlkörpers an einem Stirnende des Hohlkörpers ausgebildet. Weiter vorzugsweise ist die umlaufende Kantenfläche des zweiten Hohlköpers zu den Stirnenden des zweiten Körpers beabstandet und definiert einen Ausschnitt durch die Wand des zweiten Hohlkörpers hindurch.

In einer weiteren bevorzugten Ausführungsform ist die umlaufende Kantenfläche des ersten Hohlkörpers an einem Stirnende des Hohlkörpers ausgebildet. Weiter vorzugsweise ist die umlaufende Kantenfläche des zweiten Hohlkörpers zu den Stirnenden des ersten Hohlkörpers beabstandet und definiert einen Ausschnitt durch die Wand des zweiten Hohlkörpers hindurch. Diese Ausgestaltung liegt insbesondere dann vor, wenn der ersten Hohlkörper ein sogenanntes Anschlusselement darstellt, und der zweite Hohlkörper ein sogenanntes Grundrohr darstellt, von dem aus sich eine oder mehrere Anschlusselemente seitlich fort erstrecken. An diese Anschlusselemente werden am Beispiel von Feuerlöschanlagen beispielsweise Löschdüsen oder Sprinkler angeschlossen. Eine Beabstandung der Kantenfläche zu den Stirnenden des zweiten Hohlkörpers bewirkt eine Verbindung des ersten und zweiten Hohlkörpers nach Art eines T-Musters. Vorzugsweise weisen die Hohlkörper jeweils eine Längsachse auf, und die Längsachsen der Hohlkörper sind senkrecht oder in einem Winkel von +/- 5° zur Senkrechten zu einander angeordnet. Weiter vorzugsweise ist die Längsachse des ersten Hohlkörpers koaxial zu einer Mittenachse des Ausschnitts ausgerichtet.

Der Abstand des Ausschnitts in dem zweiten Hohlkörper von dem nächstgelegenen Stirnende liegt vorzugsweise in einem Bereich von 20 cm bis 2 m.

Alternativ zu der vorstehend beschriebenen Anordnung ist in einer weiteren bevorzugten Ausführungsform die umlaufende Kantenfläche des zweiten Hohlkörpers (ebenfalls) an einem Stirnende des zweiten Hohlkörpers ausgebildet. Bei dieser Ausführungsform werden also ein erster und zweiter Hohlkörper jeweils an ihrem Stirnende mittels Schweißen miteinander verbunden. Diese Ausführungsform ist besonders bevorzugt anzuwenden, wenn der erste und der zweite Hohlkörper im Wesentlichen den gleichen Nenndurchmesser aufweisen und wenn mittels Aneinanderschweißen des ersten und zweiten Hohlkörpers verlängerte Grundrohrelemente erzeugt werden sollen.

In einer weiteren bevorzugten Ausführungsform umfasst das Verfahren ferner den Schritt: Erzeugen wenigstens einer der umlaufenden Kantenflächen des ersten und/oder zweiten Hohlkörpers mittels Schneiden, vorzugsweise mittels Plasmaschneiden. Das Plasmaschneiden hat sich insbesondere für Wandstärken von 3,0 mm und darüber als hocheffiziente Möglichkeit erwiesen, die Kantenflächen an den Hohlkörpern zu erzeugen. Es sind präzise Schnitte mit hoher Geschwindigkeit und somit hoher Wirtschaftlichkeit möglich. Plasmaschneiden eignet sich ferner für eine Automatisierung des Fertigungsprozesses. Besonders wird auch beim Plasmaschneiden ein Auffangbehälter gemäß einer der vorstehend und nachfolgend beschriebenen bevorzugten Ausführungsformen verwendet. Für die Entstehung von Spritzern beim Plasmaschneiden, deren Auswirkungen und Vermeidung gilt das anderweitig zu den Schweißspritzern gesagte analog.

Die erzeugte Kantenfläche entspricht vorzugsweise der Kontur des jeweils anderen Hohlkörpers, an den der Hohlkörper mit seiner Kantenfläche angeschweißt werden soll. Vorzugsweise wird die Kontur der zu erzeugenden Kantenfläche vorab messtechnisch bestimmt, und dann die Kantenfläche in Abhängigkeit der zuvor bestimmten Kontur erzeugt.

Vorzugsweise erfolgt der Schritt des Positionierens des Auffangbehälters bereits vor dem Schritt der Kantenerzeugung, und das Verfahren umfasst ferner:
- Auffangen von ausgeschnittenem Material das beim Erzeugen wenigstens einer der umlaufenden Kantenflächen des ersten und/oder zweiten Hohlkörpers anfällt, mittels des Auffangbehälters. Das Auffangen des ausgeschnittenen Materials kann mit dem Auffangbehälter ohne zusätzlichen Arbeitsschritt vorgenommen werden. Der Auffangbehälter kann im Anschluss an das Auffangen des Ausschnitts an seiner Position verbleiben, sofern das Erzeugen der Schweißnaht an der gleichen Arbeitsstation vorgenommen wird, oder optional auch entnommen werden, beispielsweise mittels eines manuell oder robotisch geführten Magneten, mechanischen Greifers oder dergleichen.

Das Erzeugen der Schweißnaht sowie das Erzeugen der Kantenflächen ist beispielsweise mittels Verwendung eines oder mehrerer ein- oder mehrgelenkig bewegter Roboterarme möglich. Das Schneidwerkzeug und das Schweißwerkzeug, welche hierfür benötigt werden, können beispielsweise als Wechselköpfe am selben Roboter verwendet werden.

In einer weiteren bevorzugten Ausführungsform umfasst das Verfahren ferner den Schritt: Säubern wenigstens einer der umlaufenden Kantenflächen, vorzugsweise sämtlicher umlaufender Kantenflächen, vor dem Schweißen, vorzugsweise nach dem Schneiden, insbesondere Plasmaschneiden, und vor dem Schweißen. Das Säubern der Kantenflächen umfasst insbesondere das Entfernen von Graten und losen Partikeln, aber auch von Verschmutzungen. Falls das vorgelagerte Schneiden der Kantenflächen mittels Plasmaschneiden erfolgt ist, hat sich hierdurch mitunter eine Metalloxidschicht im Bereich der Kantenfläche ausgebildet. Es ist im Rahmen der Erfindung erkannt worden, dass das Säubern der Kantenfläche und insbesondere das Entfernen von Metalloxiden von der Oberfläche der Hohlkörper im Bereich der Kantenflächen zu einem sehr viel gleichmäßigeren Schweißbild führt und eine gleichmäßigere Ausprägung der Wurzel der Schweißnaht im Inneren des Rohrleitungselements zur Folge hat. Vorteilhaft ist an dieser Ausführungsform ferner, dass sowohl das Säubern der Kantenflächen mit geringem Aufwand automatisierbar ist, insbesondere wenn es mit einer rotatorisch angetriebenen Bürste ausgeführt wird. Zum anderen erlaubt das Säubern der Kantenflächen per se auch einen automatisierten Schweißvorgang, da dieser angesichts der gesäuberten und von Metalloxiden befreiten Kantenflächen deutlich leichter beherrschbar ist.

Zusammenfassend umfasst also der Schritt des Säuberns erfindungsgemäß vorzugsweise das Entfernen von Metalloxiden und losen Partikeln von der wenigstens einen umlaufenden Kantenfläche, besonders bevorzugt von sämtlichen Kantenflächen, vorzugsweise mittels Bürsten.

Das erfindungsgemäße Verfahren umfasst in einer weiteren bevorzugten Ausführungsform ferner den Schritt: Abflachen der Wand des ersten und/oder zweiten Hohlkörpers in demjenigen Bereich, in dem sich jeweils die umlaufende Kantenfläche erstreckt oder erzeugt werden soll, vorzugsweise vor dem Schritt des Schweißens und weiter vorzugsweise vor dem Schritt des Schneidens. Das Abflachen kann mittels Aufbringen einer Deformationskraft von außen auf die Wand des jeweiligen Hohlkörpers erzeugt werden, beispielswiese pneumatisch, hydraulisch oder anderweitig mechanisch. Optional kann auf der Unterseite des Rohrleitungselements eine Gegen-Halbschale in Größe des jeweils entsprechend abzuflachenden Bereichs als Gegenhalter von außen gegen den Hohlkörper gelegt werden, um Deformationen des Rohrleitungselements an ungewünschter, also nicht an jener Stelle, an der die Abflachung stattfinden soll, zu vermeiden. Der Vorteil der Abflachung liegt darin, dass das Werkzeug zum Erzeugen der Schweißnaht eine im Wesentlichen ebene Kreisbewegung vollführen kann und nicht entlang einer dreidimensionalen Krümmung geführt werden muss. Hierdurch werden zum einen die Prozessparameter in der Führung des Schweißwerkzeuges leichter beherrschbar, und zum anderen wird der Verlauf des aufgeschmolzenen Metalls leichter beherrschbar. Da die Kantenfläche im Bereich der Abflachung im Wesentlichen eben verläuft, kann die Kantenfläche des korrespondierenden Hohlkörpers, welche an einer Stirnseite ausgebildet ist, ebenfalls in einer Ebene liegen, was das Schneiden der Kantenfläche am jeweiligen Hohlkörper wiederum vereinfacht. Die Abflachung wird vorzugsweise mit einer vorbestimmten Eindrücktiefe vorgenommen, wobei die Tiefe in bevorzugten Ausführungsformen in einem Bereich vom 0,05-fachen bis zum 0,18-fachen der Nennweite des abgeflachten Hohlkörpers liegt.

In einer weiteren bevorzugten Ausgestaltung ist das Verfahren der vorstehend beschriebenen bevorzugten Ausführungsformen ein Verfahren zur Herstellung eines polymerveredelten Rohrleitungselements einer Feuerlöschanlage und umfasst ferner:
- Aufbringen einer polymerbasierten Schicht auf der Innenseite des Rohrleitungselements, wobei die polymerbasierte Schicht die Innenseite des Rohrelements und die Wurzel der Schweißnaht vollständig bedeckt.

Das Aufbringen der polymerbasierten Schicht erfolgt in dem erfindungsgemäßen Verfahren vorzugsweise mittels Eintauchens des Rohrleitungselements in ein Tauchbad, das ein entsprechendes Beschichtungsmaterial enthält. Der Vorteil eines Tauchbeschichtungsverfahrens liegt darin, dass zusätzlich zu einer Beschichtung des besonders sensiblen Innenbereichs der Rohrleitungselemente auch die äußere Oberfläche im selben Beschichtungsvorgang zumindest weitestgehend beschichtet wird.

In einer weiteren bevorzugten Ausführungsform sind die Hohlkörper aus einem zur chemischen Autodeposition geeigneten Metall ausgebildet, insbesondere aus einem eisen- und/oder zinkhaltigen Metall, und der Schritt des Aufbringens der Polymerschicht auf der Innenseite des Rohrleitungselements umfasst: Beschichten, insbesondere mittels chemischer Autodeposition, vorzugsweise mittels Eintauchen des Rohrleitungselements in ein Tauchbad, das ein chemisches Autodepositionsmaterial auf Polymerbasis enthält. Ein Vorteil der Anwendung eines Autodepositionsverfahrens liegt unter anderem darin, dass eine gleichmäßige, sehr korrosionsbeständige Beschichtung mit gleichzeitig geringen Schichtstärken erreicht wird. Eine Beschichtung kann sich insbesondere bei Anwendung eines Tauchverfahrens überall dort bilden, wo das Rohrleitungselement benetzt wird. Hier kommt wiederum der erfindungsgemäße Vorteil der optimierten Schweißnähte zum Tragen, weil durch die vollständige, gleichmäßige Ausbildung der Schweißnaht in den vorstehend beschriebenen bevorzugten Ausführungsformen Kavitäten, und dergleichen weitestgehend vermieden werden. Ein weiterer Vorteil ist darin zu sehen, dass infolge der Autodepositionsschicht und dem von ihr ausgehenden Korrosionsschutz dünnere Rohrwandstärken möglich werden, die bislang aufgrund einer Gefahr des Durchrostens ausgeschlossen waren. Kleinere Wandstärken wiederum haben den Vorteil, dass die von den Schweißnähten eingenommenen Flächenabschnitte im Rohrinneren weiter minimiert werden können, und dass insgesamt weniger Material aufgeschweißt werden muss.

Das Autodepositionsmaterial enthält vorzugsweise polymere Bestandteile, welche ionisch an der Wand der Hohlkörper und an der Wurzel der Schweißnaht gebunden werden, und liegt vorzugsweise als wässrige Emulsion oder Dispersion vor.

Das Autodepositionsmaterial ist in seiner Flüssigphase vorzugsweise sauer, besonders bevorzugt weist es einen pH-Wert in einem Bereich von 1 bis 5 auf, und besonders bevorzugt ein Startermaterial in Form von Metallhalogeniden. Als Metallhalogenide werden für eisenhaltige Metall insbesondere Eisenhalogenide vorgeschlagen, besonders bevorzugt Eisen(III)fluorid. Die Metallhalogenide setzen mittels Reaktion an der Oberfläche der Rohrleitungselemente Metallionen, im Falle eines eisenhaltigen Rohrleitungselements also insbesondere Eisenionen, insbesondere Fe²⁺-Ionen frei, welche die polymeren Bestandteile im Autodepositionsmaterial destabilisieren, infolgedessen es zu einer Anlagerung an der Metalloberfläche der Schweißnaht und der Hohlkörper kommt.

Das Autodepositionsmaterial weist als polymeren Bestandteil vorzugsweise autodepositionierbare Polymere auf, vorzugsweise ausgewählt aus der Liste bestehend aus:
i) Epoxiden,
ii) Acrylaten,
iii) Styroacrylaten,
iv) Epoxyacrylaten,
v) Isocyanaten, insbesondere Urethanen, wie etwa Polyurethanen,
vi) Polymere mit Vinylgruppe, beispielsweise Polyvinylidenchlorid, oder
iv) eine Kombination aus zwei oder mehr von i), ii) oder iii), die vorzugsweise miteinander querverbunden sind, weiter vorzugsweise über ein Isocyanat, besonders bevorzugt über ein Urethan.

Im erfindungsgemäßen Verfahren wird der Schritt des Eintauchens in einem oder mehreren Tauchgängen solange fortgesetzt wird, bis die an der Innenseite des Rohrleitungselements angebrachte polymerbasierte Schicht eine Dicke in einem Bereich von 7 µm bis 80 µm aufweist, vorzugsweise eine Dicke in einem Bereich von 7 µm bis 30 µm. Die vorstehend genannten Werte beziehen sich auf die Trockenschichtdicke und insbesondere den Rohrdickenzuwachs relativ zum unbeschichteten Zustand. Es hat sich herausgestellt, dass auch Schichtdicken in einem Bereich ab 7 µm mit dem erfindungsgemäßen Verfahren derart aufgebracht werden können, dass eine vollständige Bedeckung der inneren Oberfläche des Rohrleitungselements erfolgt, sowie eines Großteils der äußeren Oberfläche, sofern entsprechend eingetaucht.

Die Erfindung wurde vorliegend in einem ersten Aspekt unter Bezugnahme auf das erfindungsgemäße Verfahren beschrieben. In einem weiteren Aspekt betrifft die Erfindung ferner ein Rohrleitungselement, welches in einem Verfahren nach einer der vorstehend beschriebenen bevorzugten Ausführungsformen hergestellt wurde.

Das Rohrleitungselement löst die eingangs bezeichnete zugrunde liegende Aufgabe, indem es aufweist: einen ersten Hohlkörper, einen zweiten Hohlkörper, wobei die Hohlkörper aufeinander ausgerichtet sind und der erste und der zweite Hohlkörper mittels einer umlaufenden Schweißnaht verbunden sind, wobei das Rohrleitungselement innenseitig einen ersten Wandbereich aufweist, in dem die Schweißnaht eine sich auf der Innenseite des Rohrleitungselements erstreckende umlaufende Wurzel aufweist, wobei sich der erste Wandbereich entlang des Umfangs des Rohrleitungselements sowie in Längsrichtung des Rohrleitungselements beiderseits der Schweißnaht um eine vorbestimmte Länge erstreckt, das Rohrleitungselement innenseitig einen zweiten Wandbereich aufweist, der benachbart zu dem ersten Wandbereich angeordnet ist, und das Rohrleitungselement eine in dem ersten Wandbereich und in dem zweiten Wandbereich gleichförmige Oberflächenstruktur aufweist. Eine gleichförmige Oberflächenstruktur liegt vor, wenn die Anzahl an Oberflächenunregelmäßigkeiten, insbesondere in Form von Schweißspritzern, in einem Bereich von 0,2 Stück/cm² oder darunter liegt. Als Oberflächenunregelmäßigkeiten werden insbesondere von der Oberfläche vorstehende Erhöhungen um 0,3 mm oder mehr verstanden.

Die Erfindung macht sich hinsichtlich des Rohrleitungselements die gleichen Vorteile und bevorzugten Ausführungsformen zu eigen wie das erfindungsgemäße Verfahren der vorstehend beschriebenen bevorzugten Ausführungsformen. Zur Vermeidung von Wiederholungen wird auf die obigen Ausführungen verwiesen.

Das Bereitstellen des Rohrleitungselements mit einer im ersten und im zweiten Wandbereich gleichförmigen Oberflächenstruktur erhöht die Eignung des Rohrleitungselements, mit sehr dünnen Schutzschichten innenseitig beschichtet zu werden. Die Gleichförmigkeit der Oberflächenstruktur wird besonders bevorzugt definiert über die Oberflächenrauheit in dem ersten und zweiten Wandbereich, jeweils gemittelt über den gesamten Wandbereich mit Ausnahme der Wurzel der Schweißnaht, wobei die Oberflächenrauheit in dem ersten Bereich und die Oberflächenrauheit in dem zweiten Bereich gleich ist, oder die Oberflächenrauheit in dem ersten Wandbereich um nicht mehr als 15 % oberhalb der Oberflächenrauheit in dem zweiten Wandbereich liegt, oder um nicht mehr als 15 % unterhalb der Oberflächenrauheit in dem zweiten Wandbereich liegt. Vorzugsweise liegt die vorgenannte Abweichung in einem Bereich von 10% oder weniger, besonders bevorzugt in einem Bereich von 5 % oder weniger. Die Oberflächenrauheit wird vorzugsweise derfiniert über den Mittenrauwert Rₐ und/oder die gemittelte Rautiefe R_{z}, wobei der Mittenrauwert Rₐ ein Mittelwert aller absoluten Abweichungen des Rauheitsprofils von einer mittleren Linie einer vorbestimmten Messstrecke ist, und die gemittelte Rautiefe R_{z} der Mittelwert der Einzelrautiefen aus fünf aufeinander folgenden Einzelmessstrecken im Rauheitsprofil, wobei die Abstände zwischen den Extremwerten jeder Messtrecke addiert und über die Anzahl der Messtrecken gemittelt werden. Besonders bevorzugt in dem ersten Wandbereich und in dem zweiten Wandbereich in einem Bereich einen Mittelrauwert Rₐ < 8 µm und einer Rautiefe R_{z} < 40 µm.

Besonders bevorzugt ist die Wand des Rohrleitungselements in dem ersten Wandbereich frei von Schweißspritzern.

In einer bevorzugten Ausführungsform weist das Rohrleitungselement eine polymerbasierte Schicht auf der Innenseite des Rohrleitungselements auf, wobei die polymerbasierte Schicht die Innenseite des Rohrelements und die Wurzel der Schweißnaht vollständig bedeckt. Die vorstehend beschriebenen Anforderungen an die Oberflächenstruktur gelten gleichermaßen für eine Innenseite des Rohrelements mit polymerbasierter Schicht als auch für das unbeschichtete Rohrleitungselement. Vorzugsweise weist das Rohrleitungselement auch auf seiner Außenseite zumindest weitestgehend eine solche polymerbasierte Schicht auf.

In einer bevorzugten Weiterbildung des Rohrleitungselements erfasst die Wurzel der Schweißnaht eine Kantenfläche eines der Hohlkörper vollständig, und das Rohrleitungselement weist im Inneren eine verbleibende Innenkante des anderen Hohlkörpers auf, welche um einen vorbestimmten Maximalwert in radialer Richtung von der Schweißnaht beabstandet ist.

Vorzugsweise ist der vorbestimmte Maximalwert, sofern gleiche Wandstärken vorliegen, kleiner oder gleich der Hälfte einer Wandstärke der Hohlkörper, besonders bevorzugt kleiner oder gleich eines Viertels der Wandstärke der Hohlkörper. Alternativ ist der Maximalwert, sofern unterschiedliche Wandstärken vorliegen, vorzugsweise kleiner oder gleich einer Differenz der Wandstärken der Hohlkörper, besonders bevorzugt kleiner oder gleich der Hälfte der Wandstärken der Hohlkörper. In einer bevorzugten Ausführungsform umfasst die Wurzel der Schweißnaht die Kantenflächen beider Hohlkörper vollständig und steht von einer Innenseite des ersten und/oder zweiten Hohlkörpers um einen vorbestimmten Maximalwert radial nach innen vor, wobei der vorbestimmte Maximalwert vorzugsweise das 0,7fache der Wandstärke der Hohlkörper oder weniger beträgt. In einer weiteren bevorzugten Ausgestaltung ist die Wand des ersten Hohlkörpers an einem seiner Stirnenden mit einem von den Stirnenden des zweiten Hohlkörpers beabstandeten Bereich der Wand des zweiten Hohlkörpers verschweißt, in dem sich ein Ausschnitt durch die Wand hindurch erstreckt. Eine solche Anordnung der ersten und zweiten Hohlkörper bezeichnet man auch als T-Anordnung. Eine solche Anordnung ist besonders dann bevorzugt, wenn das Rohrleitungselement als ersten Hohlkörper ein Anschlusselement aufweist, und als zweiten Hohlkörper ein Haupt- beziehungsweise Grundrohr, von dem aus sich ein oder mehrere Anschlusselemente seitlich forterstrecken. Die Anschlusselemente werden weiter unten noch detaillierter aufgeführt. Vorzugsweise weisen die Hohlkörper jeweils eine Längsachse auf, und die Längsachsen der Hohlkörper sind senkrecht oder in einem Winkel von +/- 5° zur Senkrechten zu einander angeordnet. Weiter vorzugsweise ist die Längsachse des ersten Hohlkörpers koaxial zu einer Mittenachse des Ausschnitts ausgerichtet.

Der Abstand des Ausschnitts in dem zweiten Hohlkörper von dem nächstgelegenen Stirnende liegt vorzugsweise in einem Bereich von 20 cm bis 2 m.

In einer alternativen bevorzugten Ausgestaltung sind die Wände des ersten und des zweiten Hohlkörpers jeweils an einem Stirnende des jeweiligen Hohlkörpers miteinander verschweißt. Bei dieser Ausgestaltung werden also die Hohlkörper jeweils endseitig miteinander verschweißt, beispielsweise um ein Rohrleitungselement mit einer bestimmten Länge zu erzeugen, die über das Maß der jeweiligen Hohlkörper hinausgeht. Das Verschweißen auf erfindungsgemäße Art und Weise der Hohlkörper ist bei dieser Ausgestaltung besonders bevorzugt für jene Ausgestaltungen, in denen der erste und der zweite Hohlkörper gleiche oder fast gleiche Nenndurchmesser aufweisen. Nenndurchmesser-Abweichungen im Bereich von bis zu 10 % können hierbei in der Regel toleriert werden.

In einer weiteren bevorzugten Ausführungsform ist die Wand des zweiten Hohlkörpers in einem Bereich um den Ausschnitt herum abgeflacht. Mit anderen Worten ist der zweite Hohlkörper in demjenigen Wandbereich, in dem auch der erste Hohlkörper angebracht werden soll, abgeflacht. Dies hat den Vorteil, dass die entsprechende Kantenfläche des ersten Hohlkörpers im Wesentlichen eben ausgebildet sein kann, und keine dreidimensionale Krümmung aufweisen muss, mit der sich der erste Hohlkörper ansonsten an die Wand hätte anschmiegen müssen, da die Wand im Bereich der Abflachungen ebenfalls im Wesentlichen eben ist.

In einer weiteren bevorzugten Ausführungsform sind die Hohlkörper aus einem zur chemischen Autodeposition geeigneten Metall ausgebildet, insbesondere aus einem eisenhaltigen und/oder zinkhaltigen Metall ausgebildet, und die polymerbasierte Schicht enthält einen metallischen Bestandteil, vorzugsweise in Form von Metallionen, bei einem eisenhaltigen Metall also besonders bevorzugt in Form von Eisenionen und bei einem zinkhaltigen Metall in Form von Zinkionen.

Das Autodepositionsmaterial weist als polymeren Bestandteil vorzugsweise autodepositionierbare Polymere auf, vorzugsweise ausgewählt aus der Liste bestehend aus:
i) Epoxiden,
ii) Acrylaten,
iii) Styroacrylaten,
iv) Epoxyacrylaten,
v) Isocyanaten, insbesondere Urethanen, wie etwa Polyurethanen,
vi) Polymere mit Vinylgruppe, beispielsweise Polyvinylidenchlorid, oder
iv) eine Kombination aus zwei oder mehr von i), ii) oder iii),
die vorzugsweise miteinander querverbunden sind, weiter vorzugsweise über ein Isocyanat, besonders bevorzugt über ein Urethan. In einer weiteren bevorzugten Ausgestaltung weist die polymerbasierte Schicht eine Dicke in einem Bereich von 7 µm bis 80 µm auf, besonders bevorzugt eine Dicke in einem Bereich von 7 µm bis 30 µm. Dies bezieht sich wiederum auf die Trockenschichtdicke und insbesondere auf eine Dickenzunahme relativ zum unbeschichteten Zustand.

Vorzugsweise ist der zweite Hohlkörper rohrförmig ausgebildet und weist einen Nenndurchmesser in einem Bereich von DN 15 bis DN 300 auf, vorzugsweise in einem Bereich von DN 32 bis DN 80. Alternativ liegen die Nennweitenbereiche im Zoll-System von ½" (NPS) bis 12" (NPS), besonders bevorzugt in einem Bereich von 1 ¼" (NPS) bis 3" (NPS).

Vorzugsweise weist der zweite Hohlkörper eine Längsachse und eine Rohrlänge in Richtung der Längsachse in einem Bereich von 1 m oder mehr auf, weiter vorzugsweise in einem Bereich von 3 m oder mehr, besonders bevorzugt in einem Bereich von 5 m oder mehr.

Weiter vorzugsweise ist der erste Hohlkörper ebenfalls rohrförmig ausgebildet und weist einen Nenndurchmesser auf, der gleich dem Nenndurchmesser des zweiten Hohlkörpers oder geringer als der Nenndurchmesser des zweiten Hohlkörpers ist.

Der erste Hohlkörper ist vorzugsweise ausgewählt aus der Liste bestehend aus:
Rohr,
Stutzen,
Flansch,
Verschlusskappe,
Red uzierstück,
Bogen, oder Nippel.

Vorzugsweise ist an dem ersten Hohlkörper ein Befestigungselement ausgebildet, vorzugsweise ausgewählt aus der Liste bestehend aus:
Gewinde;
Nut; oder
Flanschring.

Das Befestigungselement ist vorzugsweise dazu eingerichtet, Fluidausbringvorrichtungen, wie etwa Löschdüsen, Sprinkler, Fluidverteiler oder andere Rohrleitungselemente an den ersten Hohlkörper anzuschließen. Vorzugsweise ist das Befestigungselement zumindest partiell aus einem der oben genannten zur chemischen Autodeposition geeigneten Metalle, insbesondere einem eisenhaltigen und/oder zinkhaltigen Metall ausgebildet und zumindest partiell mit der polymerbasierten Schicht versehen.

Die Erfindung wurde vorstehend unter Bezugnahme auf ein Rohrleitungselement und ein Herstellverfahren für das Rohrleitungselement beschrieben. In einem weiteren Aspekt betrifft die Erfindung auch ein Rohrleitungssystem einer Feuerlöschanlage, mit einer Anzahl von Rohrleitungselementen, die miteinander gekoppelt sind, wobei eines, mehrere oder sämtliche Rohrleitungselemente nach einer der vorstehend beschriebenen bevorzugten Ausführungsformen ausgebildet wurde, oder hergestellt sind. Die bevorzugten Ausführungsformen und erfindungsgemäßen Vorteile des Herstellverfahrens und des erfindungsgemäßen Rohrleitungselements sind zugleich die Vorteile und bevorzugten Ausführungsformen des erfindungsgemäßen Rohrleitungssystems, weswegen diesbezüglich zur Vermeidung von Wiederholungen auf die vorliegenden Ausführungen verwiesen wird.

Besonders bevorzugt weist eines, mehrere oder sämtliche der Rohrleitungselemente einen rohrförmig ausgebildeten ersten Hohlkörper und einen rohrförmig ausgebildeten zweiten Hohlkörper auf, wobei der Nenndurchmesser des ersten Hohlkörpers gleich oder geringer als der Nenndurchmesser des zweiten Hohlkörpers ist, und wobei an dem der Schweißnaht zwischen den beiden Hohlkörpern abgewandten Stirnseite des ersten Hohlkörpers jeweils ein Sprinkler, eine Löschdüse, ein Fluidverterteiler oder ein weiteres Rohrleitungselement angeschlossen ist.

Die Erfindung betrifft ferner auch eine Verwendung eines Rohrleitungselements in einem Rohrleitungssystem einer Feuerlöschanlage, in der eine Anzahl von Rohrleitungselementen miteinander gekoppelt werden, wobei jeweils eines, mehrere oder sämtliche Rohrleitungselemente nach einer der vorstehend beschriebenen bevorzugten Ausführungsformen ausgebildet ist bzw. sind.

Die Erfindung wird nachfolgend unter Bezugnahme auf die beigefügten Figuren und unter Bezugnahme auf bevorzugte Ausführungsbeispiele näher beschrieben. Hierbei zeigen:
- Fig. 1: ein schematisches Verfahrens-Fließbild des erfindungsgemäßen Verfahrens gemäß einem bevorzugten Ausführungsbeispiel,
- Fig. 2: ein schematisches Verfahrens-Fließbild des Verfahrens gemäß Fig.1, eingebettet in ein Verfahren zur Herstellung eines polymerveredelten Rohrleitungselements
- Fig. 3: eine schematische räumliche Darstellung eines Rohrleitungselements, hergestellt nach dem erfindungsgemäßen Verfahren,
- Fig. 4a, b: Seitenansichten des Rohrleitungselements gemäß Fig. 3,
- Fig. 5a - e und Fig. 6: a - e Detaildarstellungen verschiedener bevorzugter Varianten des Rohrleitungselements gemäß den Fig. 3 und 4a, b.

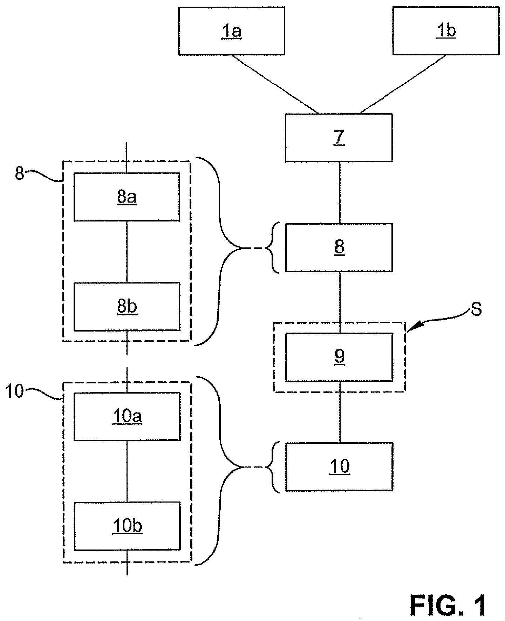

In Fig. 1 ist der schematische Ablauf des erfindungsgemäßen Verfahrens zum Herstellen eines polymerveredelten Rohrleitungselements nach einem bevorzugten Ausführungsbeispiel dargestellt. Zunächst werden in den Schritten 1a, 1b ein erster Hohlkörper und ein zweiter Hohlkörper bereitgestellt.

In einem nächsten Verfahrensschritt 7 werden der erste Hohlkörper und der zweite Hohlkörper so zueinander ausgerichtet, dass jeweils eine Kantenfläche des einen Hohlkörpers möglichst nah benachbart zu einer korrespondierenden Kantenfläche des jeweils anderen Hohlkörpers ausgerichtet und angeordnet wird. Das Ausrichten der Hohlkörper zueinander kann manuell oder mittels ein- oder mehrgelenkiger Roboter erfolgen.

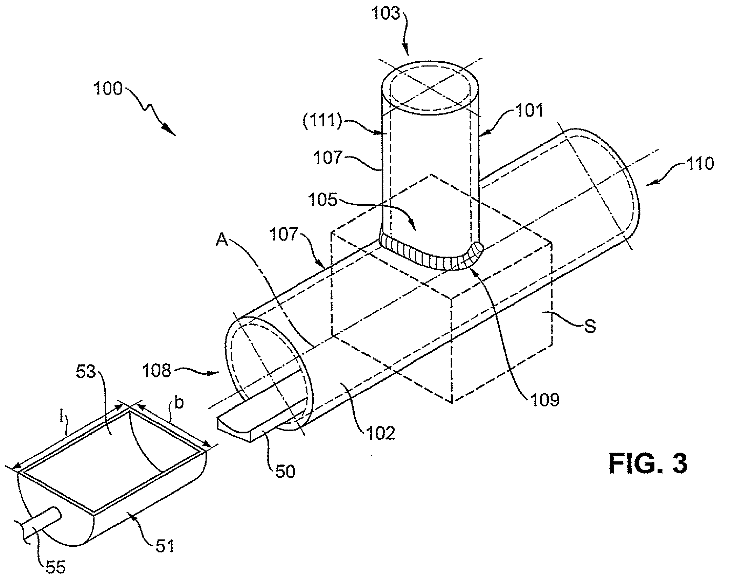

Nach dem Ausrichten der Hohlkörper zueinander wird ein Auffangbehälter in einem Verfahrensschritt 8 in wenigstens einen der beiden Hohlkörper eingeführt, vgl. Fig. 3. Der Auffangbehälter wird derart angeordnet, dass er bei einem nachfolgenden Verfahrensschritt 9, in dem geschweißt wird, in einer Schweißzone S angeordnet ist, und etwaige Schweißspritzer auffängt, die sich von der Schweißnaht und deren Wurzel aus im Inneren des oder der Hohlkörper ausbreiten, vgl. Fig. 3.

Der Verfahrensschritt 8 umfasst vorzugsweise als ersten Unterschritt 8a ein Einführen einer Führungsschiene in den oder die Hohlkörper, und als zweiten Unterschritt 8b das geführte Einführen des Auffangbehälters in den jeweiligen Hohlkörper, beispielsweise mittels einer Lanze. Die Führungsschiene hat vorzugsweise neben der Führungsfunktion auch die Funktion einen Abstand zwischen dem Auffangbehälter einerseits und der Stelle, an der die Schweißnaht erzeugt werden soll andererseits zu definieren. Je näher der Auffangbehälter an der Schweißstelle angeordnet werden kann, desto besser gelingt das Auffangen der Schweißspritzer, und desto kleiner darf der Auffangbehälter sein.

In einem nächsten Verfahrensschritt 9 werden die zuvor ausgerichteten Hohlkörper in der Schweißzone S entlang der aufeinander ausgerichteten umlaufenden Kantenflächen miteinander verschweißt, sodass eine vollständig umlaufende Schweißnaht erzeugt wird, die eine sich auf der Innenseite des Rohrleitungselements erstreckende Wurzel aufweist. Vorzugsweise wird eine einlagige Schweißnaht angebracht.

Im Anschluss an das Schweißen wird der Auffangbehälter (Schritt 10a) und, falls verwendet, die Führungsschiene (Schritt 10b), aus den Hohlkörpern bzw. dem Hohlköper wieder ausgeführt.

Das Innere der Hohlkörper ist dann vorzugsweise frei von Schweißspritzern.

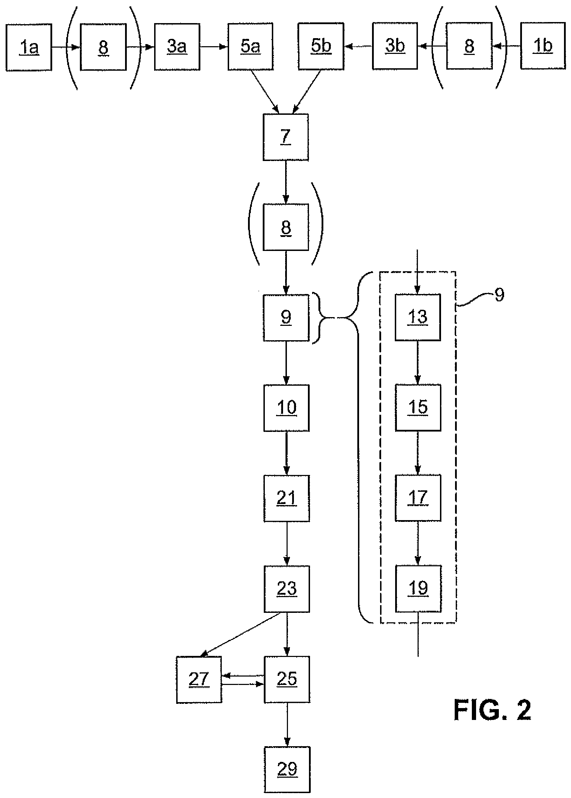

Das gemäß Fig.1 aus den Hohlkörpern erzeugte Rohrleitungselement kann im weiteren Verlauf einer Polymerveredelung zugeführt werden. Dies ist exemplarisch in Fig. 2 gezeigt. Zusätzlich zu den in Fig. 1 bereits dargestellten Etappen des Verfahrens erfolgen hier noch die nachfolgenden Schritte.

Im Anschluss an den Schritt 1a, b werden in einem nächsten Verfahrensschritt 3a, b zunächst Kantenflächen an den Hohlkörpern vorgesehen, vorzugsweise mittels Plasmaschneiden. Die Hohlkörper erhalten in den Schritten 3a, b entweder Kantenflächen an einer oder beiden ihrer Stirnseiten oder an einem von den jeweiligen Stirnseiten beabstandeten Wandabschnitt, letzteres in Form eines Ausschnitts. In einer bevorzugten Variante des Verfahrens wird bereits vor dem Schritt der Kantenerzeugung Schritt 8 (bzw. 8a, 8b) ausgeführt, so dass der Auffangbehälter zugleich auch das Auffangen des Verschnitts übernehmen kann.

In einem sich der Kantenerzeugung anschließenden Verfahrensschritt 5a, b werden der erste und zweite Hohlkörper an den Kantenflächen gesäubert, vorzugsweise mittels einer rotatorisch angetriebenen Bürste. Sollte im vorhergehenden Schritt zum Erzeugen der Kantenflächen Plasmaschneiden zum Einsatz gekommen sein, werden durch das Bürsten entstandene Metalloxide und lose Partikel sowie Grate möglichst weitgehend entfernt.

Nach dem Schweißen werden die miteinander verschweißten Hohlkörper als Rohrleitungselement in einem Verfahrensschritt 21, der wiederum mehrere, nicht näher dargestellte Unterschritte aufweisen kann, für das nachfolgende Beschichten vorbereitet. Die Vorbereitung umfasst das Reinigen der miteinander verschweißten Hohlkörper in einem oder mehreren Tauchbädern, in denen beispielsweise Beize oder Spülmedien wie etwa entmineralisiertes Wasser vorgehalten werden können. Die genaue Anzahl und Anordnung der Vorbereitungsschritte richtet sich nach den Spezifikationen des zu verwendenden Beschichtungsmaterials.

Die in Schritt 21 vorbereiteten verschweißten Hohlkörper werden in einem nächsten Verfahrensschritt 23 sodann in einem oder mehreren Tauchgängen mittels eines Autodepositionsverfahrens chemisch beschichtet. Durch das Eintauchen wird erreicht, dass die vollständige Innenseite inklusive der Schweißnaht, aber auch die Außenseite der Hohlkörper im Wesentlichen vollständig beschichtet wird.

Im Nachgang zum Beschichten der Hohlkörper und der Schweißnaht mit der polymerbasierten Schicht findet eine thermische Nachbehandlung in einem Schritt 25 statt. Der Schritt 25 kann einen oder mehrere Unterschritte umfassen, in denen jeweils ein Flash-Off, oder ein Tempern mit vorbestimmten Temperaturen und Temperdauern erfolgt (Niedrigtempern oder Hochtempern). Optional können die so beschichteten und nachbehandelten Rohrleitungselemente, die aus den Hohlkörpern erzeugt wurden, in einem Schritt 27 pulverbeschichtet werden. Auch die Pulverbeschichtung wird vorzugsweise in einer thermischen Nachbehandlung in Schritt 25 ausgehärtet.

Im Anschluss daran wird in Schritt 29 das Rohrleitungselement aus dem Herstellungsprozess ausgeführt und liegt einsatzbereit vor.

Der Verfahrensschritt 25 zur thermischen Nachbehandlung der Rohrleitungselemente ist der Einfachheit halber als ein singulärer Schritt abgebildet. Es können aber in Schritt 25 mehrere aufeinanderfolgende Wärmebehandlungsstufen erfolgen, die in einer oder in mehreren verschiedenen Einrichtungen vorgenommen werden.

Das Schweißverfahren gemäß Schritt 9 kann beispielsweise dadurch optimiert werden, dass in einem Messschritt 13, der zeitlich zu einem beliebigen Zeitpunkt zwischen den Schritten 1a, b und dem Schweißschritt 9 vorgenommen werden kann, die Durchmesser der Hohlkörper und die Wandstärken der Hohlkörper insbesondere im Bereich der Kantenflächen vermessen werden. Optional erfolgt online eine Vermessung, beispielsweise optisch mittels Spalterkennung, unmittelbar beim Verfahrensschritt der Kantenflächenerzeugung, und auf Basis der gemessenen Größen dann eine Anpassung der Schweißparameter zur Kompensation etwaig festgestellter Abweichungen der gemessenen Geometrie von der Ausgangsgeometrie, für die die ursprünglichen Schweißparameter hinterlegt waren. Dies ermöglicht, im Schweißvorgang selbst die Auswirkungen der Abweichungen, beispielsweise etwaige Unrundheiten des Hohlkörpers, zu kompensieren.

In Abhängigkeit der gemessenen Parameter wird dann vorzugsweise in einem Verfahrensschritt 15 aus einer vordefinierten Wertetabelle ein Parametersatz zum optimalen Anbringen der Schweißnaht ausgewählt. Die Parameter, die in der vordefinierten Wertetabelle für jeden Durchmesser und jede Wandstärke abgelegt sind, umfassen vorzugsweise den Vorschub, die Bahn des Schweißwerkzeugs, Wahl eines Schweißzusatzes und, bei Lichtbogenschweißen, die anzuwendende Spannung, die Förderrate des Schweißdrahts etc.

In einem darauffolgenden Schritt 17 werden vorzugsweise die zuvor ermittelten Parameter in das Schweißwerkzeug eingelesen oder, sofern manuell geschweißt werden soll, dem Bediener bereitgestellt, damit im darauffolgenden Schritt 19 das Verschweißen des ersten und zweiten Hohlkörpers miteinander stattfinden kann.

Unter Bezugnahme auf Fig. 1 und 2 wurde das Verfahren schematisch erläutert. Das mit dem Verfahren erzeugte Rohrleitungselement, auf das zuvor schon teilweise Bezug genommen wurde, wird in den Fig. 3 bis 6a - e an mehreren Varianten näher erläutert.

In Fig. 3 ist zunächst ein Rohrleitungselement 100 gezeigt, das einen ersten Hohlkörper 101 und einen zweiten Hohlkörper 102 aufweist.

Der erste Hohlkörper 101 weist ein erstes Stirnende 103 auf und ein zweites Stirnende 105, an welchem er mit dem zweiten Hohlkörper 102 verschweißt ist. Der zweite Hohlkörper 102 weist an der Stelle, an welcher er mit dem ersten Hohlkörper 101 verschweißt ist, einen Ausschnitt in seiner Seitenwand 107 auf.

Der erste Hohlkörper 101 und der zweite Hohlkörper 102 sind mittels einer einlagigen vollständig umlaufenden Schweißnaht 109 verbunden.

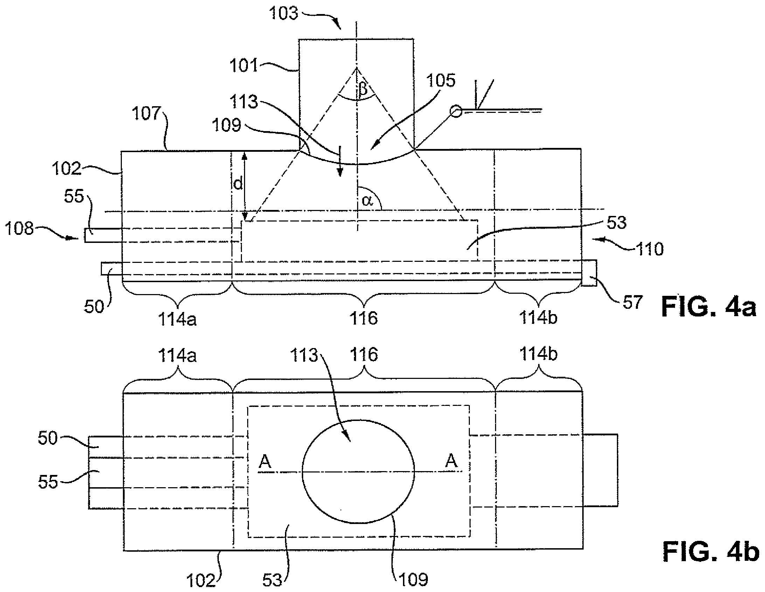

Um zu dem in Fig. 3 gezeigten Rohrleitungselement 100 zu gelangen, ohne eine ungleichförmige Oberflächenstruktur auf der Innenseite des Rohrleitungselements 100 zu riskieren, werden vorzugsweise folgende Maßnahmen ergriffen: Vor dem Vorgang des Schweißens wird optional eine Führungsschiene 50 in Richtung der Längsachse A des zweiten Hohlkörpers 102 in den Hohlkörper 102 eingeführt. Die Führungsschiene 50 dient als Führungsmittel für einen Auffangbehälter 51, welcher im Anschluss an das Einführen der Führungsschiene 50 ebenfalls in den zweiten Hohlkörper 102 eingeführt wird. Der Auffangbehälter 51 weist einen Grundkörper 53 zum Auffangen der Schweißspritzer auf, welcher wie in Fig. 3 angedeutet schalen- oder topfartig geformt sein kann. Alternativ kann der Grundkörper 53 aber auch als ebene Platte oder V-förmig angewinkeltes Flächenelement ausgebildet sein. Alternativ wird ohne eine Führungsschiene gearbeitet, und der Auffangbehälter 51 wird allein eingeführt. Hierfür gelten die Darstellungen gemäß Fig. 3 und Fig. 4a-b ansonsten entsprechend.

Der Auffangbehälter 51 wird vorzugsweise mittels einer Lanze 55 entlang der Führungsschiene 50 geführt, in den zweiten Hohlkörper 102 eingebracht und derart im Bereich der zu erzeugenden Schweißnaht 109, also in der Schweißzone S positioniert, dass der Grundkörper 53 mit seiner Breite b und seiner Länge I die beim Schweißen der Schweißnaht 109 etwaig entstehenden Schweißspritzer auffangen kann. Hierbei ist die Führungsschiene 50 vorzugsweise in Abstimmung auf den Grundkörper 53 des Auffangbehälters 51 derart dimensioniert, dass der Auffangbehälter möglichst nah an die zu erzeugende Schweißnaht 109 herangerückt wird, ohne das Innere der Rohrleitung zu berühren oder zu verkratzen.

Details zur Positionierung des Auffangbehälters 51 ergeben sich auch aus den Fig. 4a, b.

Wird das Rohrleitungselement 100 ausgehend vom Zustand gemäß Fig. 3 einer Polymerveredelung wie beispielsweise dem Verfahren gemäß Fig. 2 unterzogen, bildet sich in dem Verfahren auf der Innenseite des Rohrleitungselements und bei einem vollständigen Eintauchen auf der Außenseite des Rohrleitungselements 100 eine polymerbasierte Schicht 111, die sich vollständig entlang der Innenseiten der Hohlkörper 101, 102 erstreckt und auch die umlaufende Schweißnaht 109, und insbesondere die Wurzel der Schweißnaht vollständig bedeckt.

Der erste Hohlkörper 101 ist im gezeigten Ausführungsbeispiel in etwa mittig zwischen einem ersten Stirnende 108 und einem zweiten Stirnende 110 des zweiten Hohlkörpers 102 angeordnet und, wie sich insbesondere in Fig. 4a, b erkennen lässt, möglichst koaxial auf einen in der Seitenwand 107 des zweiten Hohlkörpers 102 ausgebildeten Ausschnitt 113 ausgerichtet. Der erste Hohlkörper 101 und der zweite Hohlkörper 102 sind zueinander in einem Winkel α aufeinander ausgerichtet, der beispielsweise in einem Bereich um 90° liegen kann.

Wie die Fig. 4a, b ferner zeigen, wird durch die Schweißnaht 109 im Zusammenspiel mit den Durchmessern des ersten und zweiten Hohlkörpers 101, 102, ein Bereich definiert, in dem sich Schweißspritzer erwartungsgemäß ablagern können, wenn die Schweißnaht 109 erzeugt wird. Dieser Bereich lässt sich annähernd charakterisieren durch einen Streuwinkel β, der sich von der Schweißnaht 109 aus erstreckt. Aufgrund der schwierigen Vorhersagbarkeit des Flugs der Schweißspritzer wird ein erster Wandbereich 116 definiert, der sich um einen vordefinierten Betrag beiderseits der Schweißnaht 109 erstreckt und im Wesentlichen den gesamten Umfang des Innenbereichs des zweiten Hohlkörpers einnimmt. Benachbart zu diesem ersten Wandbereich erstrecken sich jeweils zweite Wandbereiche 114a, b zu beiden Seiten des zweiten Hohlkörpers 102.

Der Auffangbehälter 53 ist im Wesentlichen mittig unterhalb der Schweißnaht 109 im ersten Wandbereich 116 positioniert und sorgt dafür, dass nach dem Schweißen vorzugsweise sämtliche Schweißspritzer aufgefangen wurden. Der sich hieraus ergebende Vorteil ist der, dass, gemittelt über die gesamte Fläche des Wandbereichs mit Ausnahme der Wurzel der Schweißnaht selbst, jeweils nach wie vor die gleiche Oberflächenrauheit vorliegt wie in den benachbarten Wandbereichen 114a, b, in denen sich auch sonst keine Schweißspritzer abgelagert hätten.

Wie sich aus der Projektionsdarstellung gemäß Fig. 4b zeigt, ist der Auffangbehälter 53 zwar von seinen Abmaßen her, insbesondere hinsichtlich seiner Breite b und seiner Länge I, kleiner als der maximale Flächenbereich, der sich unter dem Streuwinkel β auf der der Schweißnaht 109 gegenüberliegenden Rohrseite abzeichnet. Aufgrund seiner Positionierung in einem (radialen) Abstand d zu der Stelle, an der die Schweißnaht 109 erzeugt wird, kann der Auffangbehälter 53 dennoch sämtliche Schweißspritzer auffangen.

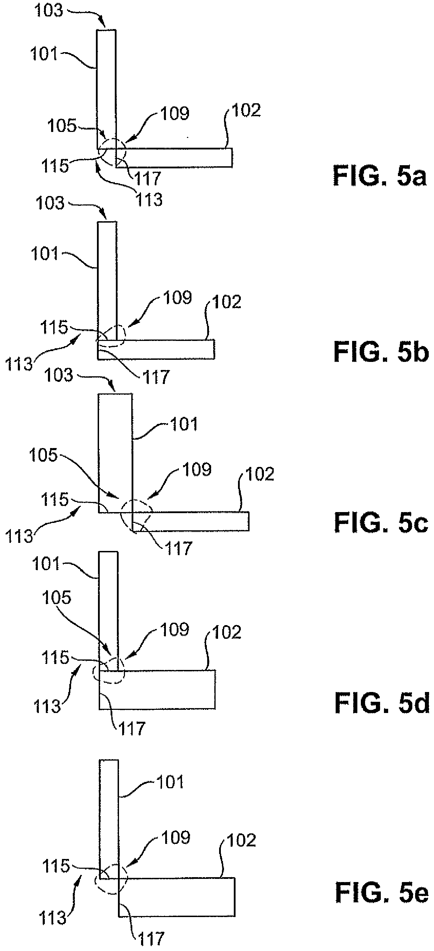

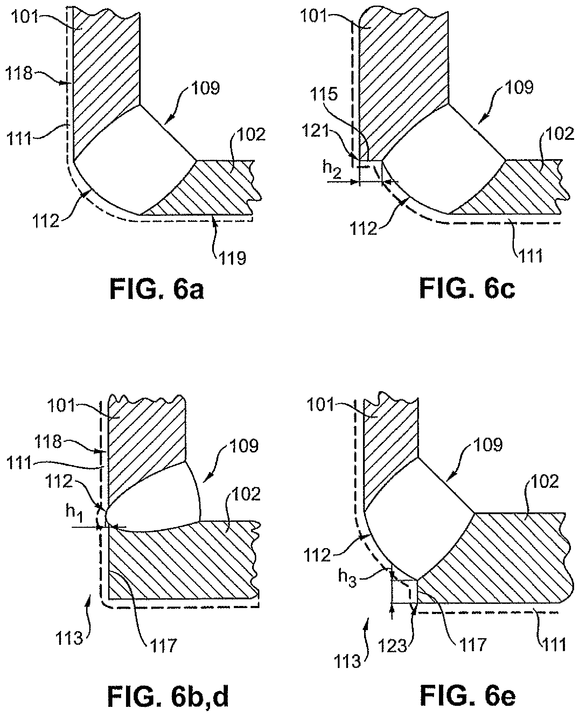

In den Fig. 5a - e und 6a - e sind verschiedene Details zur Positionierung der Hohlkörper relativ zueinander sowie zur Auswahl der Form der Schweißnaht abgebildet, jeweils entlang der Schnittebene A-A.

Aus den Fig. 5a - e gehen unterschiedliche Anordnungsvarianten der ersten und zweiten Hohlkörper 101, 102 zueinander hervor, und mit ihnen auch unterschiedliche Szenarien für die konkrete Ausprägung der Schweißnaht im Inneren des Rohrleitungselements 100 (vgl. Fig. 1 bis 4b). Den Fig. 5a - e ist gemein, dass der erste Grundkörper an seinem zweiten Stirnende 105 eine Kantenfläche 115 aufweist, und der zweite Hohlkörper 102 eine den Ausschnitt 113 begrenzende Kantenfläche 117 aufweist. Die Ausführungsformen der Fig. 5a - e unterscheiden sich in erster Linie hinsichtlich der Anordnung der Kantenflächen 115, 117 zueinander.

In Fig. 5a ist zunächst abgebildet, dass die Kantenfläche 115 des ersten Hohlkörpers 101 in die von der Kantenfläche des zweiten Hohlkörpers 102 definierte Öffnung 113 hineinragt. Vorzugsweise sind der erste Hohlkörper 101 und der zweite Hohlkörper 102 so aufeinander ausgerichtet, und der Ausschnitt 113 im zweiten Hohlkörper 102 so dimensioniert, dass die Kantenfläche 115 des ersten Hohlkörpers 101 nur an äußeren umlaufenden Kante mit dem zweiten Hohlkörper 102 in Verbindung steht, oder sich vollständig innerhalb des Ausschnitts 113 erstreckt. Auf diese Weise muss zum Erzielen einer vollständig umlaufenden Schweißnaht nur vergleichsweise Material aufgeschmolzen werden, und eine zügige Arbeitsweise wird ermöglicht. Im Idealfall lässt sich bei einer Anordnung gemäß Fig. 5a eine Schweißnaht erzeugen, wie sie in Fig. 6a dargestellt ist. Unter "Idealfall" wird hierbei eine korrekte Auswahl eines vordefinierten Parametersatzes verstanden, der die genauen Abmessungen der Hohlkörper 101 und 102 und die Position der Kantenflächen 115, 117 berücksichtigen.

Im Unterschied zu Fig. 5a ist in Fig. 5b der erste Hohlkörper etwas größer hinsichtlich seines Durchmessers gewählt, jedenfalls relativ zum Durchmesser des Ausschnitts 113. Die Kantenfläche 115 liegt außen auf dem zweiten Hohlkörper 102 auf. Die Innenseite der Wandung des ersten Hohlkörpers 101 schließt vorzugsweise bündig mit der Kantenfläche 117 des Ausschnitts 113 im zweiten Hohlkörper 102 ab. Bei einer Ausrichtung und Dimensionierung gemäß Fig. 5b wird bei Auswahl eines entsprechenden Parametersatzes ein Schweißbild gemäß Fig. 6b, d erhalten.

In Fig. 5c ist eine Ausrichtung zwischen erstem Hohlkörper 101 und zweitem Hohlkörper 102 im Wesentlichen wie in Fig. 5a erfolgt, so dass die Kantenfläche 115 mit einer außen umlaufenden Kante an der Kantenfläche 117 des zweiten Hohlkörpers 102 anliegt oder zu dieser dort benachbart ist.

Im Unterschied zu Fig. 5a ist die Materialstärke des ersten Hohlkörpers 101 allerdings höher, so dass sich ein Schweißbild, jeweils wiederum bei Auswahl des korrekten Parametersatzes, gemäß Fig. 6c einstellen wird.

Fig. 5d unterscheidet sich hinsichtlich der Dimensionierung des ersten Hohlkörpers relativ zum zweiten Hohlkörper von Fig. 5b. Qualitativ ist hier dasselbe Schweißbild zu erwarten, weswegen auf die oberen Ausführungen sowie auf Fig. 6b, d verwiesen wird.

Fig. 5e wiederum zeigt eine Ausrichtung der ersten und zweiten Hohlkörper 101, 102 relativ zueinander, wie sie auch bei den Fig. 5a und 5c bereits ausgewählt waren. Im Unterscheid zu den Fig. 5c, 5d ist die Materialstärke des zweiten Hohlkörpers 102 allerdings so ausgewählt, dass sich ein Schweißbild gemäß Fig. 5e einstellt, sofern der korrekte Parametersatzgewählt wird.

Wie sich aus Fig. 6a ergibt, sind bei der in Fig. 5a gezeigten Ausrichtung die Hohlkörper 101 und 102 zueinander im Idealfall bei Kantenflächen 115, 117 vollständig von einer Wurzel 112 der Schweißnaht 109 erfasst, so dass ein sanfter Übergang zwischen einer Innenseite 118 des ersten Hohlkörpers 101 und einer Innenseite 119 des zweiten Hohlkörpers 102 erzeugt wird. Der sanfte Konturübergang zwischen dem ersten und zweiten Hohlkörper 101, 102 bietet Vorteile für jegliche Art der Polymerveredelung, prädestiniert das Rohrleitungselement allerdings ganz besonders für die Polymerveredelung mittels Autodeposition, da die Strömungsverhältnisse im Rohrinneren infolge des sanften Konturübergangs weniger stark gestört werden. Auf diese Geometrie inklusive der Schweißnaht lässt sich idealerweise die polymerbasierte Schicht 111 aufbringen. In Fig. 6b, d läuft die Wurzel 112 der Schweißnaht 109 ebenfalls vollständig umfänglich entlang der Verbindungsstelle zwischen dem ersten Hohlkörper 101 und dem zweiten Hohlkörper 102 um. Im Unterscheid zu Fig. 5a ist aber nur die Kantenfläche 115 des ersten Hohlkörpers 101 vollständig von der Schweißnaht 109 erfasst worden, während die Kantenfläche 117 des zweiten Hohlkörpers 102 nur partiell erfasst worden ist. Aufgrund der Ausrichtung und Dimensionierung zwischen erstem Hohlkörper 101 und Ausschnitt 113 steht die Wurzel 112 der Schweißnaht 109 aber lediglich um einen vorbestimmten Maximalwert h₁ radial nach innen von der Wand 118 des ersten Hohlkörpers 101 vor. h₁ liegt vorzugsweise in einem Bereich des 0,7fachen der Materialstärke der Wand 107 oder darunter. Die Schweißnaht stellt somit keine Behinderung für das vollständige Benetzen der Innenseite des Rohrleitungselements mit der polymerbasierten Schicht 111 dar.

In Fig. 6c ist eine Variante dargestellt, in der aufgrund der Materialstärke des ersten Hohlkörpers 101 nicht die vollständige Kantenfläche 115 des ersten Hohlkörpers 101 von der Wurzel 112 der Schweißnaht 109 erfasst wurde, so dass ein Teil, nämlich im Bereich einer Innenkante 121 radial nach innen von der Schweißnaht 109, bezogen auf den ersten Hohlkörper 101, vorsteht. Solange aber die Innenkante 121 nicht mehr als um einen vorbestimmten Maximalwert h₂ von der Schweißnaht 109 beabstandet ist, ist die durch die verbleibende Kantenfläche 115 entstehende Schwelle für den Strömungswiderstand in tolerierbaren Grenzen. Ferner wird eine vollständige Benetzung der Innenseite des Rohrleitungselements mit der polymerbasierten Schicht 111 hierdurch nicht signifikant beeinträchtigt. Vorzugsweise liegt der Wert h₂ in einem Bereich des 0,5fachen der Differenz der Wandstärke der Wände 107, falls diese dieselbe Wandstärke aufweisen, oder darunter. Alternativ ist h₂ vorzugsweise geringer als die Differenz der beiden Wandstärken der Hohlkörper 101, 102, sofern die Wandstärken voneinander verschieden sind.

In Fig. 6e ist analog zu Fig. 6c dargestellt, in der aufgrund der Materialstärke eines der Hohlkörper, in diesem Fall des zweiten Hohlkörpers 10, keine vollständige Erfassung beider Kantenflächen des ersten Hohlkörpers 101 und des zweiten Hohlkörpers 102 erfolgt. In diesem Fall ist es eine Innenkante 123 am Ausschnitt 113 im zweiten Hohlköper 102, die um einen vorbestimmten Wert h₃ von der Wurzel 112 der Schweißnaht 109 beabstandet ist, so dass ein Teil der Kantenfläche 117 des zweiten Hohlkörpers 102 weiterhin sichtbar ist. Sofern aber der Wert h₃ einen vorbestimmten Maximalwert nicht überschreitet, vorzugsweise bestimmt wie h₂ weiter oben, wird die vollständige Ausbildung einer polymerbasierten Schicht 111 jedoch nicht behindert, und auch die Strömungszustände nicht unzulässig verschlechtert. Die Vorteile der Ausführungsformen gemäß den Fig. 6c und 6e liegen in einer technisch deutlich einfacheren Beherrschbarkeit. Die Durchmesser- und Materialstärkentoleranzen des ersten Hohlkörpers 101 und des zweiten Hohlkörpers 102 können im Vergleich zu den Ausführungsformen der Fig. 6a und 6b, d großzügiger bemessen sein, was die Vorauswahl geeigneter Parametersätze vereinfacht.

In Zusammenschau ist es mit der Erfindung gelungen, erstmalig das Anwendungsgebiet der Polymerveredelung auch auf komplexe Rohrleitungselemente mit einer oder mehreren Schweißverbindungen zu erweitern. Dort, wo der Stand der Technik bislang aufgrund mangelnder Güte der Schweißnähte auf der Innenseite der Rohrleitungselemente ein erfolgreiches Beschichten noch verhinderte, schlägt die Erfindung eine vorteilhafte Weiterentwicklung vor. Durch das gezielte Auffange von Schweißspritzern im Nahbereich um die Wurzel der Schweißnaht herum wird die Oberflächengüte des Rohrleitungselements im Inneren verbessert.

### Bezugszeichenliste:

- 1-29: Verfahrensschritte;
- 50: Führungsschiene
- 51: Auffangbehälter
- 53: Grundkörper
- 55: Lanze
- 100: Rohrleitungselement
- 101: erster Hohlkörper
- 102: zweiter Hohlkörper
- 103: erstes Stirnende, erster Hohlkörper
- 105: zweites Stirnende, erster Hohlkörper
- 107: Wand, Hohlkörper
- 108: erstes Stirnende, zweiter Hohlkörper
- 109: Schweißnaht
- 110: zweites Stirnende, zweiter Hohlkörper
- 111: polymerbasierte Schicht
- 112: Wurzel, Schweißnaht
- 113: Ausschnitt
- 114a, b: zweiter Wandbereich
- 115: Kantenfläche, erster Hohlkörper
- 116: erster Wandbereich
- 117: Kantenfläche, zweiter Hohlkörper
- 118: Innenseite, erster Hohlkörper
- 121: Innenkante, erster Hohlkörper
- 123: Innenkante, zweiter Hohlkörper
- A: Längsachse
- S: Schweißzone
- I: Länge, Auffangbehälter
- b: Breite, Auffangbehälter
- d: Abstand
- h₁, h₂, h₃: vorbestimmter Maximalwert
- α, β: Winkel

## Patentansprüche

1. Verfahren zum Herstellen eines Rohrleitungselements (100), insbesondere eines Rohrleitungselements (100) einer Feuerlöschanlage, wobei das Verfahren die Schritte umfasst:
- Bereitstellen eines ersten Hohlkörpers (101) und eines zweiten Hohlkörpers (102),
- Positionieren der Hohlkörper in einer Schweißzone (S) derart zueinander, dass in der Schweißzone (S) das Verbinden der Hohlkörper erfolgen kann,
- Positionieren eines Auffangbehälters (51) innerhalb des ersten und/oder zweiten Hohlkörpers im Bereich der Schweißzone (S), und
- Schweißen des ersten Hohlkörpers (101) an den zweiten Hohlkörper (102) in der Schweißzone (S), so dass das Rohrleitungselement (100) erhalten wird, wobei eine vollständig umlaufende Schweißnaht (109) erzeugt wird, die eine sich auf der Innenseite (118, 119) des Rohrleitungselements (100) erstreckende Wurzel (112) aufweist, und
Auffangen von während des Schweißens auf der Innenseite (118, 119) des Rohrleitungselements (100) entstehenden Schweißspritzern mittels des Auffangbehälters (51).

2. Verfahren nach Anspruch 1,
wobei die Schweißnaht (109) mittels eines Schweißwerkzeugs erzeugt wird, indem das Schweißwerkzeug und/oder die Hohlkörper (101, 102) derart relativ zueinander bewegt werden, dass eine Schweißstelle eine Bahn entlang der ersten und zweiten Hohlkörper beschreibt, und
der Auffangbehälter (51) im Wesentlichen gegenüber der Schweißstelle positioniert wird.

3. Verfahren nach Anspruch 1 oder 2,
wobei der Auffangbehälter (51) von einem Stirnende (108) des ersten oder zweiten Hohlkörpers (101, 102) her innerhalb des jeweiligen Hohlkörpers in die Schweißzone (S) eingeführt wird,
wobei vorzugsweise der Auffangbehälter mittels einer Lanze in einem Abstand zu der Wand des jeweiligen Hohlkörpers bewegt wird.

4. Verfahren nach Anspruch 3,
wobei vor dem Einführen des Auffangbehälters eine Führungsschiene in den oder die Hohlkörper eingeführt wird,
wobei vorzugsweise die Führungsschiene an der Wand des jeweiligen Hohlkörpers anliegt.

5. Verfahren nach einem der vorstehenden Ansprüche,
wobei der Auffangbehälter in seiner Einführrichtung eine Länge aufweist, die mindestens dem Durchmesser desjenigen Hohlkörpers entspricht, in den der Auffangbehälter eingeführt wird, und die vorzugsweise in einem Bereich von 1,5 bis 3,0 mal dem größten Durchmesser desjenigen Hohlkörpers entspricht, in den der Auffangbehälter eingeführt wird, und/oder
wobei derAuffangbehälter quer zu seiner Einführrichtung eine Breite (b) aufweist, die mindestens dem 0,3fachen des Durchmessers desjenigen Hohlkörpers entspricht, in den der Auffangbehälter eingeführt wird, und die vorzugsweise in einem Bereich von 0,5 bis 1,0 mal dem Durchmesser desjenigen Hohlkörpers entspricht, in den der Auffangbehälter eingeführt wird, und /oder
wobei der Auffangbehälter quer zu seiner Einführrichtung eine Breite (b) aufweist, und in eingeführtem Zustand in der Schweißzone (S) einen Abstand (d) zu der Schweißstelle einnimmt, wobei das Verhältnis (b/d) der Breite (b) zu dem Abstand (d) in einem Bereich von 0,5 oder höher liegt, vorzugsweise in einem Bereich von 1 bis 4, besonderes bevorzugt in einem Bereich von 1,5 bis 3,5.

6. Verfahren nach einem der vorstehenden Ansprüche,
wobei der erste und zweite Hohlkörper (101, 102) jeweils eine Wand (107) aufweisen, und die Wand (107) jeweils eine umlaufende Kantenfläche (115, 117) aufweist, und das Verfahren umfasst:
- Ausrichten der umlaufenden Kantenfläche (115) des ersten Hohlkörpers (101) und der umlaufenden Kantenfläche (117) des zweiten Hohlkörpers (102) aufeinander, und
- Erzeugen der Schweißnaht entlang der umlaufenden Kantenflächen (115, 117).

7. Verfahren nach einem der vorstehenden Ansprüche,
wobei die umlaufende Kantenfläche (115) des ersten Hohlkörpers (101) an einem Stirnende (105) des Hohlkörpers (101) ausgebildet ist; und/oder
wobei die umlaufende Kantenfläche (117) des zweiten Hohlkörpers (102)
a) zu den Stirnenden (108, 110) des zweiten Hohlkörpers (101) beabstandet ist und einen Ausschnitt (113) durch die Wand des zweiten Hohlkörpers (102) hindurch definiert, oder
b) an einem Stirnende des zweiten Hohlkörpers (102) ausgebildet ist.

8. Verfahren nach einem der vorstehenden Ansprüche,
ferner umfassend den Schritt:
Erzeugen wenigstens einer der umlaufenden Kantenflächen (115, 117) des ersten und/oder zweiten Hohlkörpers (102) mittels Schneiden, vorzugsweise mittels Plasmaschneiden, wobei vorzugsweise der Schritt des Positionierens des Auffangbehälters bereits vor dem Schritt der Kantenerzeugung erfolgt, und das Verfahren vorzugsweise wenigstens einen der Schritte umfasst:
- Auffangen von ausgeschnittenem Material, das beim Erzeugen wenigstens einer der umlaufenden Kantenflächen (115, 117) des ersten und/oder zweiten Hohlkörpers anfällt, mittels des Auffangbehälters, und/oder
- Säubern wenigstens einer der umlaufenden Kantenflächen (115, 117), vorzugsweise sämtlicher Kantenflächen (115, 117), vor dem Schweißen, vorzugsweise nach dem Schneiden.

9. Verfahren nach einem der vorstehenden Ansprüche,
wobei das Verfahren ein Verfahren zur Herstellung eines polymerveredelten Rohrleitungselements (100) einer Feuerlöschanlage ist, und ferner umfasst:
- Aufbringen einer polymerbasierten Schicht (111) auf der Innenseite des Rohrleitungselements (100), wobei die polymerbasierte Schicht (111) die Innenseite des Rohrelements und die Wurzel der Schweißnaht (109) vollständig bedeckt,
wobei das Aufbringen der polymerbasierten Schicht vorzugsweise mittels Eintauchen des Rohrleitungselements in ein Tauchbad erfolgt, das ein entsprechendes Beschichtungsmaterial enthält; und/oder
wobei die Hohlkörper aus einem zur chemischen Autodeposition geeigneten Metall, insbesondere einem eisenhaltigen und/oder zinkhaltigen Metall ausgebildet sind, und der Schritt des Aufbringens der Polymerschicht auf der Innenseite des Rohrleitungselements (100) umfasst:
Beschichten, insbesondere mittels chemischer Autodeposition, vorzugsweise mittels Eintauchen des Rohrleitungselements (100) in ein Tauchbad, das ein chemisches Autodepositionsmaterial auf Polymerbasis enthält.

10. Verfahren nach Anspruch 9,
wobei das Autodepositionsmaterial polymere Bestandteile enthält, welche ionisch an der Wand der Hohlkörper und an der Wurzel (112) der Schweißnaht (109) gebunden werden, und vorzugsweise als wässrige Emulsion oder Dispersion vorliegt, und/oder wobei das Autodepositionsmaterial sauer ist, vorzugsweise einen pH-Wert in einem Bereich von 1 bis 5 aufweist, und vorzugsweise ein Startermaterial in Form von Metallhalogeniden umfasst, und/oder
wobei das Autodepositionsmaterial als polymeren Bestandteil ein oder mehrere autodepositionierbare Polymere aufweist, vorzugsweise ausgewählt aus der Liste bestehend aus:
i) Epoxiden,
ii) Acrylaten,
iii) Styroacrylaten,
iv) Epoxyacrylaten,
v) Isocyanaten, insbesondere Urethanen, wie etwa Polyurethanen,
vi) Polymere mit Vinylgruppe, beispielsweise Polyvinylidenchlorid, oder
iv) eine Kombination aus zwei oder mehr von i), ii) oder iii), die vorzugsweise miteinander querverbunden sind, weiter vorzugsweise über ein Isocyanat, besonders bevorzugt über ein Urethan.

11. Verfahren nach einem der Ansprüche 9 oder 10,
wobei der Schritt des Eintauchens in einem oder mehreren Tauchgängen solange fortgesetzt wird, bis die an der Innenseite des Rohrleitungselements angebrachte polymerbasierte Schicht eine Dicke in einem Bereich von 7 µm bis 80 µm aufweist, vorzugsweise eine Dicke in einem Bereich von 7 µm bis 30 µm.

12. Rohrleitungselement (100), hergestellt in einem Verfahren nach einem der vorstehenden Ansprüche, mit:
- einem ersten Hohlkörper (101),
- einem zweiten Hohlkörper (102),
wobei die Hohlkörper (101, 102) aufeinander ausgerichtet sind, und der erste und der zweite Hohlkörper (101, 102) mittels einer umlaufenden Schweißnaht (109) verbunden sind, wobei
- das Rohrleitungselement innenseitig einen ersten Wandbereich aufweist, in dem die Schweißnaht (109) eine sich auf der Innenseite des Rohrleitungselements (100) erstreckende umlaufende Wurzel (112) aufweist, wobei sich der erste Wandbereich (116) entlang des Umfangs des Rohrleitungselements (100) sowie in Längsrichtung des Rohrleitungselements (100) beiderseits der Schweißnaht (109) um eine vorbestimmte Länge erstreckt;
- das Rohrleitungselement innenseitig einen zweiten Wandbereich (114a, b) aufweist, der benachbart zu dem ersten Wandbereich (116) angeordnet ist; und
- das Rohrleitungselement eine in dem ersten Wandbereich (116) und in dem zweiten Wandbereich (114a, b) gleichförmige Oberflächenstruktur aufweist.

13. Rohrleitungssystem einer Feuerlöschanlage, mit
einer Anzahl von Rohrleitungselementen (100), die miteinander gekoppelt sind,
wobei eines, mehrere oder sämtliche Rohrleitungselemente nach Anspruch 12 ausgebildet sind.

14. Verwendung eines Rohrleitungselements (100) in einem Rohrleitungssystem einer Feuerlöschanlage, in der eine Anzahl von Rohrleitungselementen miteinander gekoppelt werden, wobei jeweils eines, mehrere oder sämtliche Rohrleitungselemente nach Anspruch 12 ausgebildet ist bzw. sind.

## Claims

1. A method for producing a pipeline element (100), in particular a pipeline element (100) of a fire extinguishing installation, wherein the method comprises the steps:
- providing a first hollow body (101) and a second hollow body (102),
- positioning the hollow bodies relative to one another in a welding zone (S) such that the connection of the hollow bodies can be performed in the welding zone (S),
- positioning a collecting container (51) within the first and/or second hollow body in the region of the welding zone (S), and
- welding the first hollow body (101) to the second hollow body (102) in the welding zone (S) such that the pipeline element (100) is obtained, wherein a fully encircling weld seam (109) is generated which has a root (112) extending on the inside (118, 119) of the pipeline element (100), and
collecting, by means of the collecting container (51), weld spatter that occurs on the inside (118, 119) of the pipeline element (100) during the welding process.

2. The method as claimed in claim 1,
wherein the weld seam (109) is generated by means of a welding tool by virtue of the welding tool and/or the hollow bodies (101, 102) being moved relative to one another such that a welding point describes a path along the first and second hollow bodies, and
the collecting container (51) is positioned substantially opposite the welding point.

3. The method as claimed in claim 1 or 2,
wherein the collecting container (51) is introduced, proceeding from a face end (108) of the first or second hollow body (101, 102), within the respective hollow body into the welding zone (S),
wherein preferably the collecting container is moved by means of a lance with a spacing to the wall of the respective hollow body.

4. The method as claimed in claim 3,
wherein, before the introduction of the collecting container, a guide rail is introduced into the one or more hollow bodies,
wherein preferably the guide rail lies against the wall of the respective hollow body.

5. The method as claimed in any of the preceding claims,
wherein the collecting container has a length in its introduction direction which corresponds at least to the diameter of that hollow body into which the collecting container is introduced and which preferably corresponds, in a range from 1.5 to 3.0 times, to the largest diameter of that hollow body into which the collecting container is introduced,
and/or
wherein the collecting container has a width (b) transversely with respect to its introduction direction which corresponds at least to 0.3 times the diameter of that hollow body into which the collecting container is introduced and which preferably corresponds, in a range from 0.5 to 1.0 times, to the diameter of that hollow body into which the collecting container is introduced,
and/or
wherein the collecting container has a width (b) transversely with respect to its introduction direction, and in the introduced state in the welding zone (S) assumes a spacing (d) to the welding point, wherein the ratio (b/d) of the width (b) to the spacing (d) lies in a range of 0.5 or higher, preferably in a range from 1 to 4, particularly preferably in a range from 1.5 to 3.5.

6. The method as claimed in any of the preceding claims,
wherein the first and second hollow bodies (101, 102) each have a wall (107), and the wall (107) has in each case an encircling edge surface (115, 117), and the method comprises:
- aligning the encircling edge surface (115) of the first hollow body (101) and the encircling edge surface (117) of the second hollow body (102) with one another, and
- generating the weld seam along the encircling edge surfaces (115, 117).

7. The method as claimed in any of the preceding claims,
wherein the encircling edge surface (115) of the first hollow body (101) is formed at a face end (105) of the hollow body (101),
and/or
wherein the encircling edge surface (117) of the second hollow body (102)
a) is spaced apart from the face ends (108, 110) of the second hollow body (101) and defines a cutout (113) through the wall of the second hollow body (102), or
b) is formed at a face end of the second hollow body (102).

8. The method as claimed in any of the preceding claims,
furthermore comprising the step:
generating at least one of the encircling edge surfaces (115, 117) of the first and/or second hollow body (102) by means of cutting, preferably by means of plasma cutting,
wherein the step of positioning the collecting container is preferably performed before the step of edge generation, and the method preferably comprises at least one of the steps:
- collecting, by means of the collecting container, cut-out material that arises during the generation of at least one of the encircling edge surfaces (115, 117) of the first and/or second hollow body, and/or
- cleaning at least one of the encircling edge surfaces (115, 117), preferably all of the edge surfaces (115, 117), before the welding, preferably after the cutting.

9. The method as claimed in any of the preceding claims, wherein the method is a method for producing a polymer-enhanced pipeline element (100) of a fire extinguishing installation, and furthermore comprises:
- applying a polymer-based layer (111) to the inside of the pipeline element (100), wherein the polymer-based layer (111) completely covers the inside of the pipe element and the root of the weld seam (109),
wherein the application of the polymer-based layer is preferably performed by dipping of the pipeline element into a dip bath which contains a corresponding coating material, and/or
wherein the hollow bodies are formed from a metal suitable for chemical autodeposition, in particular a ferrous and/or zinc-containing metal, and the step of applying the polymer layer to the inside of the pipeline element (100) comprises:
coating, in particular by means of chemical autodeposition, preferably by dipping of the pipeline element (100) into a dip bath which contains a polymer-based chemical autodeposition material.

10. The method as claimed in claim 9,
wherein the autodeposition material comprises polymer constituents which are ionically bonded to the wall of the hollow bodies and to the root (112) of the weld seam (109), and is preferably present as an aqueous emulsion or dispersion,
and/or
wherein the autodeposition material is acidic, preferably has a pH value in a range from 1 to 5, and preferably comprises a starter material in the form of metal halides,
and/or
wherein the autodeposition material has, as polymer constituent, one or more autodeposi-tionable polymers preferably selected from the list comprising:
i) epoxides,
ii) acrylates,
iii) styrene acrylates,
iv) epoxy acrylates,
v) isocyanates, especially urethanes, such as polyurethanes,
vi) polymers with a vinyl group, for example polyvinylidene chloride, or
iv) a combination of two or more of i), ii) or iii), which are preferably crosslinked to one another, more preferably via an isocyanate, particularly preferably via a urethane.

11. The method as claimed in any of claims 9 or 10,
wherein the dipping step is continued in one or more dipping processes until such time as the polymer-based layer applied to the inside of the pipeline element has a thickness in a range from 7 µm to 80 µm, preferably a thickness in a range from 7 µm to 30 µm.

12. A pipeline element (100),
produced in a method as claimed in any of the preceding claims, having:
- a first hollow body (101),
- a second hollow body (102),
wherein the hollow bodies (101, 102) are aligned with one another, and the first and second hollow bodies (101, 102) are connected by means of an encircling weld seam (109), wherein
- the pipeline element has, on the inside, a first wall region in which the weld seam (109) has an encircling root (112) extending on the inside of the pipeline element (100), wherein the first wall region (116) extends along the circumference of the pipeline element (100) and to both sides of the weld seam (109) over a predetermined length in a longitudinal direction of the pipeline element (100);
- the pipeline element has, on the inside, a second wall region (114a, b) which is arranged adjacent to the first wall region (116); and
- the pipeline element has a surface structure that is uniform in the first wall region (116) and in the second wall region (114a, b).

13. A pipeline system of a fire extinguishing installation, having
a number of pipeline elements (100) which are coupled to one another,
wherein one, multiple or all pipeline elements are designed as claimed in claim 12.

14. The use of a pipeline element (100) in a pipeline system of a fire extinguishing installation, in which a number of pipeline elements are coupled to one another, wherein in each case one, multiple or all pipeline elements is or are designed as claimed in claim 12.

## Revendications

1. Procédé de fabrication d'un élément de conduite tubulaire (100), en particulier d'un élément de conduite tubulaire (100) d'une installation d'extinction d'incendie, dans lequel le procédé comprend les étapes suivantes :
- la fourniture d'un premier corps creux (101) et d'un second corps creux (102),
- le positionnement des corps creux dans une zone de soudage (S) l'un par rapport à l'autre de telle manière que la liaison des corps creux puisse être effectuée dans la zone de soudage (S),
- le positionnement d'un récipient collecteur (51) à l'intérieur du premier et/ou du second corps creux dans la zone de la zone de soudage (S), et
- le soudage du premier corps creux (101) au niveau du second corps creux (102) dans la zone de soudage (S) de sorte que l'élément de conduite tubulaire (100) soit obtenu, dans lequel un cordon de soudure (109) complètement périphérique est généré, lequel présente une racine (112) s'étendant sur le côté intérieur (118, 119) de l'élément de conduite tubulaire (100), et
la collecte de projections de soudage apparaissant pendant le soudage sur le côté intérieur (118, 119) de l'élément de conduite tubulaire (100) au moyen du récipient collecteur (51).

2. Procédé selon la revendication 1,
dans lequel le cordon de soudure (109) est généré au moyen d'un outil de soudage en ce que l'outil de soudage et/ou les corps creux (101, 102) sont déplacés l'un par rapport à l'autre de telle manière qu'un cordon de soudure décrive une trajectoire le long des premier et second corps creux, et
le récipient collecteur (51) est positionné sensiblement par rapport au point de soudure.

3. Procédé selon la revendication 1 ou 2,
dans lequel le récipient collecteur (51) est introduit depuis une extrémité frontale (108) du premier ou second corps creux (101, 102) à l'intérieur du corps creux respectif dans la zone de soudage (S),
dans lequel le récipient collecteur est de préférence déplacé au moyen d'une lance à une distance de la paroi du corps creux respectif.

4. Procédé selon la revendication 3,
dans lequel, avant l'introduction du récipient collecteur, un rail de guidage est introduit dans le ou les corps creux,
dans lequel de préférence, le rail de guidage repose contre la paroi du corps creux respectif.

5. Procédé selon l'une quelconque des revendications précédentes,
dans lequel le récipient collecteur présente, dans son sens d'introduction, une longueur qui correspond au moins au diamètre du corps creux dans lequel le récipient collecteur est introduit, et qui correspond de préférence dans une plage de 1,5 à 3,0 fois le plus grand diamètre du corps creux dans lequel le récipient collecteur est introduit, et/ou
dans lequel le récipient collecteur présente, transversalement à son sens d'introduction, une largeur (b) qui correspond au moins à 0,3 fois le diamètre du corps creux dans lequel le récipient collecteur est introduit, et qui correspond de préférence dans une plage de 0,5 à 1,0 fois le diamètre du corps creux dans lequel le récipient collecteur est introduit, et/ou
dans lequel le récipient collecteur présente, transversalement à son sens d'introduction, une largeur (b), et, dans l'état introduit dans la zone de soudage (S), occupe une distance (d) par rapport au point de soudage, dans lequel le rapport (b/d) de la largeur (b) à la distance (d) se trouve dans une plage de 0,5 ou plus, de préférence dans une plage de 1 à 4, de manière particulièrement préférée dans une plage de 1,5 à 3,5.

6. Procédé selon l'une quelconque des revendications précédentes,
dans lequel le premier et le second corps creux (101, 102) présentent respectivement une paroi (107), et la paroi (107) présente respectivement une surface de bord (115, 117) périphérique, et le procédé comprend :
- l'orientation de la surface de bord (115) périphérique du premier corps creux (101) et la surface de bord (117) périphérique du second corps creux (102) l'une vers l'autre, et
- la génération du cordon de soudure le long des surfaces de bord (115, 117) périphériques.

7. Procédé selon l'une quelconque des revendications précédentes,
dans lequel la surface de bord (115) périphérique du premier corps creux (101) est réalisée au niveau d'une extrémité frontale (105) du corps creux (101) ; et/ou
dans lequel la surface de bord (117) périphérique du second corps creux (102)
a) est espacée par rapport aux extrémités frontales (108, 110) du second corps creux (101) et définit une découpe (113) à travers la paroi du second corps creux (102), ou
b) est réalisée à une extrémité frontale du second corps creux (102).

8. Procédé selon l'une quelconque des revendications précédentes,
comprenant de plus l'étape suivante :
la génération d'au moins une des surfaces de bord (115, 117) périphériques du premier et/ou second corps creux (102) au moyen de la découpe, de préférence découpe au plasma,
dans lequel de préférence l'étape du positionnement du récipient collecteur est déjà effectuée avant l'étape de la génération de bord, et le procédé comprend de préférence au moins une des étapes suivantes :
- la collecte de matériau découpé qui est produit lors de la génération d'au moins une des surfaces de bord (115, 117) périphériques du premier et/ou second corps creux, au moyen du récipient collecteur, et/ou
- le nettoyage au moins d'une des surfaces de bord (115, 117) périphériques, de préférence de toutes les surfaces de bord (115, 117), avant le soudage, de préférence après la découpe.

9. Procédé selon l'une quelconque des revendications précédentes,
dans lequel le procédé est un procédé de fabrication d'un élément de conduite tubulaire (100) ennobli de polymère d'une installation d'extinction d'incendie, et comprend de plus :
- l'application d'une couche à base de polymère (111) sur le côté intérieur de l'élément de conduite tubulaire (100), dans lequel la couche à base de polymère (111) recouvre complètement le côté intérieur de l'élément tubulaire et les racines du cordon de soudure (109),
dans lequel l'application de la couche à base de polymère est de préférence effectuée au moyen de l'immersion de l'élément de conduite tubulaire dans un bain d'immersion qui contient un matériau de revêtement correspondant ; et/ou
dans lequel les corps creux sont réalisés en un métal approprié au dépôt automatique chimique, en particulier un métal contenant du fer et/ou du zinc, et l'étape d'application de la couche de polymère sur le côté intérieur de l'élément de conduite tubulaire (100) comprend :
le revêtement, en particulier au moyen du dépôt automatique chimique, de préférence au moyen de l'immersion de l'élément de conduite tubulaire (100) dans un bain d'immersion qui contient un matériau de dépôt automatique chimique à base de polymère.

10. Procédé selon la revendication 9,
dans lequel le matériau de dépôt automatique contient des constituants de polymère qui sont liés de manière ionique au niveau de la paroi des corps creux et au niveau de la racine (112) du cordon de soudure (109), et se présente de préférence comme émulsion ou dispersion aqueuse, et/ou
dans lequel le matériau de dépôt automatique est acide, de préférence présente une valeur pH dans une plage de 1 à 5, et de préférence un matériau de départ sous la forme d'halogénures métalliques, et/ou
dans lequel le matériau de dépôt automatique présente, comme constituants de polymère, un ou plusieurs polymères pouvant être déposés automatiquement, de préférence sélectionnés à partir de la liste se composant de :
i) époxydes,
ii) acrylates,
iii) acrylates de styrène,
iv) époxyacrylates,
v) isocyanates, en particulier uréthanes comme polyuréthanes,
vi) polymères avec groupe vinyle, par exemple chlorure de polyvinylidène ou
iv) une combinaison de deux ou plus de i), ii) ou iii) qui sont reliés transversalement de préférence entre eux, de manière davantage préférée par le biais d'un isocyanate, de manière particulièrement préférée par le biais d'un uréthane.

11. Procédé selon l'une quelconque des revendications 9 ou 10,
dans lequel l'étape de l'immersion dans un ou plusieurs cycles d'immersion est prolongée jusqu'à ce que la couche à base de polymère montée au niveau du côté intérieur de l'élément de conduite tubulaire présente une épaisseur dans une plage de 7 µm à 80 µm, de préférence une épaisseur dans une plage de 7 µm à 30 µm.

12. Elément de conduite tubulaire (100) fabriqué dans un procédé selon l'une quelconque des revendications précédentes, avec :
- un premier corps creux (101),
- un second corps creux (102),
dans lequel les corps creux (101, 102) sont orientés l'un sur l'autre, et le premier et le second corps creux (101, 102) sont reliés au moyen d'un cordon de soudure (109) périphérique, dans lequel
- l'élément de conduite tubulaire présente, côté intérieur, une première zone de paroi, dans laquelle le cordon de soudure (109) présente une racine (112) périphérique s'étendant sur le côté intérieur de l'élément de conduite tubulaire (100), dans lequel la première zone de paroi (116) s'étend le long de la périphérie de l'élément de conduite tubulaire (100) ainsi que dans le sens longitudinal de l'élément de conduite tubulaire (100) de part et d'autre du cordon de soudure (109) d'une longueur prédéterminée ;
- l'élément de conduite tubulaire présente une seconde zone de paroi (114a, b) côté intérieur qui est agencée de manière contigüe à la première zone de paroi (116) ; et
- l'élément de conduite tubulaire présente une structure de surface uniforme dans la première zone de paroi (116) et dans la seconde zone de paroi (114a, b).

13. Système de conduite tubulaire d'une installation d'extinction d'incendie avec
un nombre d'éléments de conduite tubulaire (100) qui sont couplés les uns aux autres,
dans lequel un, plusieurs ou tous les éléments de conduite tubulaire sont réalisés selon la revendication 12.

14. Utilisation d'un élément de conduite tubulaire (100) dans un système de conduite tubulaire d'une installation d'extinction d'incendie, dans laquelle un nombre d'éléments de conduite tubulaire sont couplés les uns aux autres, dans laquelle respectivement un, plusieurs ou tous les éléments de conduite tubulaire est ou sont réalisés selon la revendication 12.
